(19) Europäisches Patentamt / European Patent Office / Office européen des brevets

(11) **EP 4 459 546 A1**

(12) **EUROPÄISCHE PATENTANMELDUNG**

(43) Veröffentlichungstag:
**06.11.2024 Patentblatt 2024/45**

(21) Anmeldenummer: **24169881.0**

(22) Anmeldetag: **12.04.2024**

(51) Internationale Patentklassifikation (IPC):
**G06T 7/00** (2017.01)

(52) Gemeinsame Patentklassifikation (CPC):
**G06T 7/0004;** G06T 2200/24; G06T 2207/10116;
G06T 2207/30128; G06T 2207/30164

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **04.05.2023 DE 102023111681**

(71) Anmelder: **WIPOTEC GmbH**
**67657 Kaiserslautern (DE)**

(72) Erfinder: **Bastuck, Manuel**
**67659 Kaiserslautern (DE)**

(74) Vertreter: **Eder Schieschke & Partner mbB**
**Patentanwälte**
**Elisabethstraße 34**
**80796 München (DE)**

(54) **VERFAHREN UND VORRICHTUNG ZUR DETEKTION VON ANOMALIEN IN ZWEIDIMENSIONALEN DIGITALEN BILDERN VON PRODUKTEN**

(57) Die Erfindung betrifft ein Verfahren zur Detektion von Anomalien in digitalen Bildern von Produkten. Ein digitales Bild wird in Regionen aufgeteilt, wobei eine Region als Maximal-Anomalie detektiert wird, wenn der Wert der mindestens einen Eigenschaft größer ist als ein vorgegebener Maximal-Schwellwert, oder als Minimal-Anomalie, wenn der Wert der mindestens einen Eigenschaft kleiner ist als ein vorgegebener Minimal-Schwellwert. In einem Prüfprozess wird eine Mehrzahl von digitalen Schlechtbildern von realen oder fiktiven Schlechtprodukten erzeugt, die jeweils wenigstens eine vorbekannte Anomalie aufweisen. Jedes Schlechtbild wird in Regionen aufgeteilt und der maximale Wert der betreffenden Eigenschaft der Regionen wird als Maximal-Stichprobenwert einer Maximalwert-Stichprobe bzw. Minimal-Stichprobenwert einer Minimalwert-Stichprobe bestimmt. Aus einer so erzeugten Stichprobe wird eine Detektionsrate für die wenigstens eine vorbekannte Anomalie bestimmt. Hierzu kann nach einer Alternative eine zur Beschreibung der Maximalwert-Stichprobe oder der Minimalwert-Stichprobe geeignete vorgegebene Wahrscheinlichkeitsdichtefunktion unter Verwendung eines statistischen Schätzverfahrens parametriert werden. Die Detektionsrate kann dann durch Integration der parametrierten Wahrscheinlichkeitsdichtefunktion unter Verwendung des vorgegebenen Maximal-Schwellwertes oder Minimal-Schwellwertes als Integrationsgrenze berechnet werden. Nach einer anderen Alternative kann die Detektionsrate bestimmt werden als Verhältnis der Anzahl der Werte der Maximalwert-Stichprobe oder der Minimalwert-Stichprobe, welche größer oder gleich dem vorgegebenen Maximal-Schwellwert oder kleiner oder gleich dem vorgegebenen Minimal-Schwellwert sind, und der Gesamtanzahl der Werte der Maximalwert-Stichprobe oder der Minimalwert-Stichprobe. Die so detektierte Detektionsrate kann dann der wenigstens einen vorbekannten Anomalie zugeordnet werden.

Fig. 9

**Beschreibung**

Die Erfindung betrifft ein Verfahren zur Detektion von Anomalien in digitalen Bildern von Produkten mit den Merkmalen des Oberbegriffs des Patentanspruchs 1. Weiterhin betrifft die Erfindung eine Vorrichtung sowie ein Computerprogrammprodukt zur Durchführung des Verfahrens.

Bei der Herstellung von Produkten besteht vielfach der Wunsch bzw. die Notwendigkeit, die hergestellten Produkte anschließend einer Prüfung zu unterziehen, ob das Produkt Anomalien, insbesondere Fehlstellen, Fremdkörper oder dergleichen, aufweist. Beispielsweise kann sich in der Lebensmittelindustrie bei der Herstellung von Joghurt oder Käse die Aufgabe stellen, das fertige Produkt daraufhin zu untersuchen, ob sich unerwünschte Fremdkörper oder andere unerwünschte Materialbereiche innerhalb des Produkts befinden. Zur Lösung dieses Problems werden in der Praxis Inspektionsvorrichtungen verwendet, welche das Produkt mit einer elektromagnetischen Strahlung durchstrahlen, insbesondere mit Strahlung im Röntgenspektrum. Auf diese Weise wird ein digitales Bild des Produkts erzeugt, welches nicht nur Informationen über die äußeren geometrischen Abmessungen bzw. die Oberfläche des Produkts beinhaltet, sondern auch über das Innere des Produkts. Zu detektierende Anomalien können dabei, abhängig von deren Dämpfung, beim Durchstrahlen zu Bildbereichen führen, die gegenüber den Bildbereichen, die keine Anomalien aufweisen (im Folgenden als "Gutbereiche" bezeichnet), einen höheren oder geringeren "Grauwert", d.h. Pixelwert aufweisen als die Gutbereiche. In der vorliegenden Beschreibung wird der Begriff "Grauwert" für die Information verwendet, die der Detektor abhängig von der auf die einzelnen Pixel auftreffenden Strahlungsleistung bzw. der entsprechenden Strahlungsenergie, die während der maßgeblichen Belichtungszeit detektiert wird, erzeugt, unabhängig davon, in welcher Farbe oder Art und Weise die Pixelwerte in dem betreffenden digitalen Bild darstellbar sind.

Zu einer derartigen Inspektion von Produkten sind auch Vorrichtungen bzw. Verfahren bekannt, bei denen das zu untersuchende Produkt nicht vollständig durchstrahlt wird (d.h. die Strahlungsquelle und der Detektor liegen auf gegenüberliegenden Seiten des Produkts), sondern bei denen die Strahlung in das zu untersuchende Produkt tief genug eindringt und im Produkt "reflektiert" wird, wobei diese "Reflexion" physikalisch durch eine Streuung der in einen Volumenbereich eindringenden Strahlung oder durch Erzeugung einer Fluoreszenzstrahlung in dem Volumenbereich bewirkt wird. Bei derartigen Inspektionsvorrichtungen können sich die Strahlungsquelle und der Detektor auch auf derselben Seite des zu untersuchenden Produkts befinden.

Das zu untersuchende Produkt kann dabei in Form eines Stückguts beliebiger Art oder auch als Schüttgut vorliegen, welches mittels einer Fördervorrichtung durch die Inspektionsvorrichtung gefördert wird.

Als Detektoren für die Strahlung werden in Produktionslinien, in denen die zu untersuchenden Produkte entlang eines Förderwegs bewegt werden, häufig Zeilendetektoren verwendet, die eine oder mehrere Detektorzeilen mit jeweils einer vorbestimmten Anzahl von Pixeln aufweisen. Die Produkte werden dabei, üblicherweise mit konstanter Geschwindigkeit, durch eine derartige Scanvorrichtung bewegt, wobei ein digitales Bild aus einer Vielzahl von detektierten Zeilen zusammengesetzt wird. Es ist jedoch selbstverständlich ebenfalls möglich, anstelle eines Zeilenscanners einen Flächenscanner zu verwenden. Dabei kann das digitale Bild des zu untersuchenden Produkts mittels eines einzigen Detektionsvorgangs (d.h. eines einzigen "Belichtungsvorgangs") erfasst werden.

Derart erzeugte digitale Bilder werden üblicherweise automatisiert daraufhin untersucht, ob Anomalien innerhalb des betreffenden Produkts vorliegen. Dabei kann das unmittelbar mittels des durchgeführten Scanvorgangs erzeugte Bild vor einer derartigen Untersuchung bearbeitet bzw. aufbereitet werden. Hierzu kann das ursprüngliche Bild beispielsweise digital gefiltert werden, wobei das hierfür verwendete Filter eine Kontrastverbesserung bewirken kann.

Es ist ebenfalls möglich, bereits bei der Erzeugung der Bilder Maßnahmen zur Verbesserung des Kontrastes, insbesondere im Hinblick auf eine Detektion von Anomalien, zu treffen. Beispielsweise könnte ein Dual-Energy-Verfahren verwendet werden, wobei die beiden Spektren so gewählt sind, dass sich durch eine Überlagerung der betreffenden Teilbilder eine Kontrastverbesserung ergibt.

Es ist weiterhin möglich, spektral auflösende Detektoren zu verwenden, die eine Mehrzahl von Bildern erzeugen, wobei jedes Bild aus Pixeln zusammengesetzt ist, deren Grauwert der Strahlungsenergie in jeweils einem bestimmten spektralen Ausschnitt der detektierten Strahlung entspricht. Für das Detektieren von Anomalien kann dann ein Bild verwendet werden, welches aus allen oder ausgewählten Teilbildern eines solchen spektral auflösenden Detektors erzeugt wird, beispielsweise durch gewichtete Addition der betreffenden Pixelwerte. Es kann jedoch auch jedes Teilbild separat daraufhin untersucht werden, ob eine Anomalie vorliegt.

Für die automatisierte Untersuchung des digitalen Bildes des Produkts sind Verfahren bekannt, bei denen ein Schwellwert festgelegt wird, wobei eine Anomalie dann vorliegt, wenn der Grauwert wenigstens eines Pixels größer ist als der Schwellwert. Hierzu werden in einem Lernprozess üblicherweise eine vorbestimmte Anzahl von Gutprodukten (d.h. Produkten, die keine Anomalie aufweisen) desselben Produkttyps gescannt, um eine Information über die üblicherweise in solchen Gutprodukten auftretenden maximalen Grauwerte zu erhalten. Abhängig hiervon wird dann der Schwellwert so festgelegt, dass ein vorgegebener Wert für die Fehlauswurfrate (beispielsweise ein Prozent oder ein Promille) eingehalten wird. Die Fehlauswurfrate ist dabei die Wahrscheinlichkeit, mit der ein Gutprodukt als "Schlechtprodukt" erkannt wird. Diese (theoretische) Fehlauswurfrate lässt sich durch das Bestimmen der empirischen Häufigkeit überprüfen, mit der ein Gutprodukt als Schlechtprodukt identifiziert wird. Hierzu kann eine ausreichende Anzahl von digitalen Bildern von Gutprodukten erzeugt und unter Verwendung des festgelegten Schwellwertes überprüft werden, wobei die empirische Fehlauswurfrate als Quotient der als Schlechtprodukt erkannten Gutprodukte durch die Gesamtzahl der Gutprodukte bestimmt wird.

Das Bestimmen eines solchen Schwellwertes erfordert also einen aufwändigen Lernprozess, in welchem eine relativ hohe Anzahl digitaler Bilder von Gutprodukten erzeugt werden muss. Dies ist jedoch nachteilig, da zunächst mittels der betreffenden Produktionslinie eine derartige Anzahl von Gutprodukten erzeugt werden muss, d.h. es geht entsprechend Produktionszeit verloren. Zudem kann kaum vorhergesagt werden, wie hoch die Anzahl der für den Einlernprozess erforderlichen Gutprodukte sein muss, um den Schwellwert zuverlässig so festlegen zu können, dass die gewünschte Fehlauswurfrate eingehalten wird.

In der nicht vorveröffentlichten europäischen Patentanmeldung mit der Anmeldenummer 23166616 ist ein Verfahren zur Detektion von Anomalien in digitalen Bildern beschrieben, nach dem ein automatisierter Prozess für das Festlegen eines Schwellwertes auch unter Verwendung einer geringen Anzahl von digitalen Bildern durchgeführt werden kann. Nach diesem Verfahren wird ein Schwellwert zur Detektion von Anomalien in digitalen Bildern von Produkten in einem Einlernprozess mit guter Zuverlässigkeit bestimmt. Dabei wird eine Annahme über die statistische Verteilung der größten bzw. kleinsten Werte (im Folgenden als Extremwerte bezeichnet) einer spezifischen Größe getroffen, die für die Erkennung von Anomalien in zu untersuchenden digitalen Bildern verwendet wird. Diese Verteilung der Extremwerte wird ausreichend gut mit einer vorgegebenen, zu parametrierenden Wahrscheinlichkeitsdichtefunktion beschrieben (mit dem Begriff "parametrieren" wird in dieser Beschreibung das Ermitteln bzw. Festlegen von Werten für nicht bereits festgelegte Parameter einer Wahrscheinlichkeitsdichtefunktion bezeichnet). Mit anderen Worten, es wird die Annahme getroffen, dass die Elemente der Stichprobe (d.h. die Menge der jeweiligen Maxima oder Minima) der jeweils vorgegebenen Wahrscheinlichkeitsdichtefunktion genügen bzw. sich deren Auftrittswahrscheinlichkeit gut durch diese Wahrscheinlichkeitsdichtefunktion beschreiben lässt. Unter Verwendung der Elemente der Stichprobe werden Schätzwerte für alle zu bestimmenden Parameter (d.h. für alle nicht ggf. bereits vorgegebenen Parameter) der Wahrscheinlichkeitsdichtefunktion ermittelt. Als zu parametrierenden Wahrscheinlichkeitsdichtefunktion wird nach diesem Verfahren insbesondere die verallgemeinerte Extremwertverteilung, beispielsweise eine vorgegebene Variante davon, also eine Weibull-Verteilung, eine Fréchet-Verteilung oder eine Gumbel-Verteilung, verwendet, um die Verteilung der Maximal- oder Minimalwerte der spezifischen Größe zu beschreiben.

Dieses Verfahren ist dabei nicht beschränkt auf den eingangs erläuterten Fall, in dem die Pixelwerte, insbesondere jeder einzelne Pixelwert, in Verbindung mit einem Schwellwert für die Pixelwerte für die Entscheidung herangezogen werden, ob das zu untersuchende digitale Bild eine Anomalie enthält.

Vielmehr verallgemeinert die Erfindung das dieser Vorgehensweise zugrundeliegende Prinzip. Das zu untersuchende Bild wird in eine oder mehrere Regionen aufgeteilt, wobei jeder Region wenigstens dieselbe eine Eigenschaft oder dieselben mehreren Eigenschaften zugeordnet werden. Dabei umfasst jede Region entweder genau einen oder mehrere Pixel, wobei mehrere Pixel nur dann derselben Region zugeordnet werden, wenn diese benachbart sind (d.h. jedes Pixel der Region weist mindestens ein unmittelbar benachbartes Pixel derselben Region auf). Als benachbart zu einem betrachteten Pixel kann dabei jedes Pixel angesehen werden, welches mit einer Kante einer Kante des betrachteten Pixels benachbart ist (d.h. die Pixel oben, unten, links und rechts des betrachteten Pixels), oder (zusätzlich) jedes Pixel, welches mit einer Ecke einer Ecke des betrachteten Pixels benachbart ist (d.h. die Pixel in der Verlängerung der Diagonalen des betrachteten Pixels). Für jede Eigenschaft der zuvor festgelegten Regionen wird ein Wert ermittelt, der die jeweilige Eigenschaft beschreibt. Werden den Regionen mehrere Eigenschaften zugeordnet, so können entweder separate Werte für jede Eigenschaft bestimmt werden oder es werden die Werte von zwei oder mehreren Eigenschaften zu einem kombinierten Wert verknüpft, beispielsweise durch eine arithmetische Operation (z.B. Multiplikation oder Division oder gewichtete Addition).

Das Detektieren von Anomalien erfolgt bei dieser Verallgemeinerung durch das Bestimmen eines Schwellwertes für jede Eigenschaft oder für jede Kombination von mehreren Eigenschaften.

In einem Extremfall kann das gesamte Bild als eine Region aufgefasst bzw. festgelegt werden. Wird dabei noch als spezifische Größe zur Detektion von Anomalien der Pixelwert jedes Pixels daraufhin untersucht, ob der Wert einen vorgegebenen Schwellwert für den Pixelwert über- oder unterschreitet, so führt dies zu demselben Ergebnis, wie wenn jedes Pixel als Region mit genau einem Pixel aufgefasst bzw. festgelegt wird. In diesem Fall führt die vorstehend erläuterte Verallgemeinerung unter Verwendung von vordefinierten Regionen und zugeordneten beliebigen Eigenschaften wieder zu der bisher üblichen Vorgehensweise, wonach die einzelnen Pixel hinsichtlich ihrer Pixelwerte daraufhin untersucht werden, ob diese einen Schwellwert für die Pixelwerte über- oder unterschreiten.

Die Bestimmung des Schwellwertes für eine Eigenschaft bzw. des Schwellwertes für eine Kombination von Eigenschaften erfolgt erfindungsgemäß in einem Einlernprozess. Die für die Bestimmung des Schwellwertes nötigen Bilder können bereits vorab in einer ausreichenden, vorgegebenen Anzahl erzeugt werden oder bedarfsweise, d.h. es werden sukzessive so lange ein oder mehrere neue digitale Bilder erzeugt, bis eine ausreichende Anzahl erreicht ist.

Nach diesem bekannten Verfahren kann der Einlernprozess bzw. der automatisierte Prozess zur Bestimmung des Schwellwertes für die wenigstens eine Eigenschaft unter der Verwendung von digitalen Bildern von Gutprodukten durchgeführt werden, welche keine Anomalien aufweisen. Wie bereits vorstehend erwähnt, können die Bilder, bei denen es sich um ein unmittelbares Ergebnis eines Scanvorgangs handeln kann, zunächst bearbeitet bzw. für das Detektionsverfahren aufbereitet werden. Dabei kann auch ein geeigneter Ausschnitt eines ermittelten Gesamtbildes erzeugt werden, welcher das Produkt insgesamt oder vorgegebene Teilbereiche umfasst. Der so erzeugte Ausschnitt oder auch das gesamte erfasste digitale Bild kann auch einer digitalen Filterung unterzogen werden, beispielsweise, um eine Kontrastverbesserung mit dem Ziel zu bewirken, Anomalien noch stärker hervorzuheben. Soll ein endlos produziertes Produkt oder ein Schüttprodukt auf Anomalien untersucht werden, so können digitale Bilder von Abschnitten eines solchen Produkts erzeugt und diese genauso verarbeitet und untersucht werden, wie dies mit Bildern von vereinzelten Produkten (oder Ausschnitten derartiger Produkte) möglich ist.

Es sei an dieser Stelle erwähnt, dass es nicht zwingend erforderlich ist, den automatisierten Prozess ausschließlich mit Gutprodukten durchzuführen. Vielmehr kann der automatisierte Prozess auch mit Bildern von Produkten durchgeführt werden, wie sie in einer Produktionslinie erzeugt werden, ohne dass sichergestellt ist, dass keines der Produkte ein Schlechtprodukt darstellt. Anstelle von Gutprodukten können somit auch solche als "Gut-Prozessprodukte" bezeichneten Produkte verwendet werden, wobei eine Anzahl von Gut-Prozessprodukten überwiegend aus Gutprodukten besteht und nur zu einem kleineren Teil aus Schlechtprodukten. Denn in der Praxis ist davon auszugehen, dass der Anteil von Schlechtprodukten in einer Anzahl von Gut-Prozessprodukten gering ist, insbesondere kleiner ist als 25 %, vorzugsweise kleiner als 10 %, höchst vorzugsweise kleiner als 5 %.

Im Rahmen des automatisierten Prozesses werden entweder eine fest vorgegebene Anzahl von digitalen Bildern oder eine im Verlauf des automatisierten Prozesses zu bestimmende Anzahl von Bildern von Gutprodukten bzw. Gut-Prozessprodukten erzeugt bzw. verwendet.

Für jedes der digitalen Bilder werden die eine oder die mehreren Regionen festgelegt und für jede Region der Wert der mindestens einen Eigenschaft oder der kombinierte Wert für die mehreren Eigenschaften bestimmt. Der maximale Wert dieser Werte wird als Maximal-Stichprobenwert einer Maximalwert-Stichprobe und/oder der minimale Wert dieser Werte wird als Minimal-Stichprobenwert einer Minimalwert-Stichprobe bestimmt.

Dabei können solche Extremwerte, die unplausibel sind oder eindeutig auf einen Fehler hinweisen, ausgeschlossen werden. Beispielsweise können bei der Ermittlung der Extremwerte solche Pixelwerte, die einen absoluten Maximalwert oder einen absoluten Minimalwert der verwendeten Grauwertskala aufweisen, ausgeschlossen werden, da ein entsprechender Minimalwert, beispielsweise ein Wert von 0, auf ein defektes Pixel des Detektors hinweisen kann und ein Maximalwert auf ein übersteuertes Pixel des Detektors.

Die so bestimmten Extremwerte stellen die oben erwähnte Stichprobe dar und können, beispielsweise in einer Liste, gespeichert werden (ggf. separat für die Minimalwerte und Maximalwerte).

Anschließend werden unter Verwendung der Maximal-Stichprobenwerte Schätzwerte für alle freien, nicht vorgegebenen Parameter der zur Beschreibung der Maximalwert-Stichprobe vorgegebenen Wahrscheinlichkeitsdichtefunktion und/oder unter Verwendung der Minimal-Stichprobenwerte Schätzwerte für alle freien, nicht vorgegebenen Parameter einer zur Beschreibung der Minimalwert-Stichprobe vorgegebenen Wahrscheinlichkeitsdichtefunktion bestimmt. Hierfür wird ein statistisches Schätzverfahren verwendet.

Da ein sinnvolles Ergebnis eines statistischen Schätzverfahrens, insbesondere unter Verwendung einer Schätzfunktion (auch als statistischer Schätzer bezeichnet), nur zu erwarten ist, wenn die Stichprobe eine Mindestanzahl von Werten umfasst, wird man üblicherweise eine solche Mindestanzahl vorgeben, was wiederum eine entsprechende Mindestanzahl von digitalen Bildern bedingt.

Ein wesentlicher Punkt dieses bekannten Verfahrens besteht darin, dass eine Rate vorgegeben wird, mit der in zu untersuchenden Bildern (bei der Durchführung des Verfahrens unter Verwendung des Schwellwertes) fälschlicherweise eine Maximal-Anomalie detektiert wird, oder eine Rate, mit der in zu untersuchenden Bildern (bei der Durchführung des Verfahrens unter Verwendung des Schwellwertes) richtigerweise keine Maximal-Anomalie detektiert wird, und/oder dass eine Rate vorgegeben wird, mit der in zu untersuchenden Bildern (bei der Durchführung des Verfahrens unter Verwendung des Schwellwertes) fälschlicherweise eine Minimal-Anomalie detektiert wird, oder eine Rate, mit der in zu untersuchenden Bildern (bei der Durchführung des Verfahrens unter Verwendung des Schwellwertes) richtigerweise keine Minimal-Anomalie detektiert wird. Der zu bestimmende Maximal- oder Minimalschwellwert kann also so bestimmt werden, dass die vorgegebene Rate eingehalten wird.

Unter dem Begriff einer Rate wird dabei der Quotient aus der Anzahl der Gutprodukte verstanden, die bei Anwendung des Tests das betreffende Raten-Kriterium erfüllen, und einer vorgegebenen Gesamtanzahl der Gutprodukte bzw. Prozessprodukte. Die Rate, mit der in zu untersuchenden Bildern fälschlicherweise eine Maximal- oder Minimal-Anomalie detektiert wird, entspricht damit dem in der Praxis oftmals verwendeten Begriff "Fehlauswurfrate". Die Rate, mit der in zu untersuchenden Bildern fälschlicherweise eine Maximal- bzw. Minimal-Anomalie detektiert wird, und die Rate, mit der in einem zu untersuchenden Bild richtigerweise keine Maximal- bzw. Minimal-Anomalie erkannt wird, ergeben in Summe jeweils 1. Im Betrieb einer Anlage können diese Raten auch als gleitender Wert ermittelt werden, also z.B. über die Anzahl N der zuletzt geprüften Produkte.

Ist die vorgegebene Wahrscheinlichkeitsdichtefunktion mittels des Schätzverfahrens parametriert, so kann der Maximal-Schwellwert unter Verwendung der zuvor parametrierten Wahrscheinlichkeitsdichtefunktion oder einer dieser entsprechenden Verteilungsfunktion derart bestimmt werden, dass die Wahrscheinlichkeit für das Auftreten eines maximalen Wertes, der größer oder gleich dem Maximal-Schwellwert ist, der betreffenden vorgegebenen Rate entspricht, mit der in zu untersuchenden Bildern fälschlicherweise eine Maximal-Anomalie detektiert wird, oder dass die Wahrscheinlichkeit für das Auftreten eines maximalen Wertes, der kleiner oder gleich dem Maximal-Schwellwert ist, der vorgegebenen Rate entspricht, mit der in einem zu untersuchenden Bild richtigerweise keine Maximal-Anomalie erkannt wird. Mit anderen Worten, der Maximal-Schwellwert kann so bestimmt werden, dass die Fläche unter der Wahrscheinlichkeitsdichtefunktion oberhalb des Maximal-Schwellwertes bzw. die Fläche unter der Wahrscheinlichkeitsdichtefunktion unterhalb des Maximal-Schwellwertes der betreffenden vorgegebenen Rate entspricht.

Analog hierzu kann der Minimal-Schwellwert unter Verwendung der zuvor parametrierten Wahrscheinlichkeitsdichtefunktion oder einer dieser entsprechenden Verteilungsfunktion derart bestimmt werden, dass die Wahrscheinlichkeit für das Auftreten eines minimalen Wertes, der kleiner oder gleich dem Minimal-Schwellwert ist, einer vorgegebenen Rate entspricht, mit der in zu untersuchenden Bildern fälschlicherweise eine Minimal-Anomalie detektiert wird, oder dass die Wahrscheinlichkeit für das Auftreten eines minimalen Wertes, der größer oder gleich dem Minimal-Schwellwert ist, einer vorgegebenen Rate entspricht, mit der in einem Gutprodukt richtigerweise keine Minimal-Anomalie erkannt wird. Mit anderen Worten, der Minimal-Schwellwert kann so bestimmt werden, dass die Fläche unter der betreffenden Wahrscheinlichkeitsdichtefunktion unterhalb des Minimal-Schwellwertes bzw. die Fläche unter der Wahrscheinlichkeitsdichtefunktion oberhalb des Minimal-Schwellwertes der betreffenden vorgegebenen Rate entspricht.

Zur Bestimmung der Fläche kann selbstverständlich das Integral über die Wahrscheinlichkeitsdichtefunktion verwendet werden, wobei das Integral zu bilden ist von dem betreffenden Schwellwert bis zu einer oberen Grenze des Definitionsintervalls der Wahrscheinlichkeitsdichtefunktion (z.B. unendlich oder einem vorgegebenen oberen Grenzwert, oberhalb dessen sich der Wert des Integrals, d.h. der Fläche, nur noch weniger als eine vorgegebene Fehlerschranke ändert) bzw. von einer unteren Grenze des Definitionsintervalls (z.B. minus unendlich oder einem vorgegebenen unteren Grenzwert, unterhalb dessen sich der Wert des Integrals, d.h. der Fläche, nur noch weniger als eine vorgegebene Fehlerschranke ändert) bis zum Schwellwert.

Selbstverständlich kann anstelle des Berechnens des Integrals, wie vorstehend ausgeführt, auch auf die Verteilungsfunktion der betreffenden Wahrscheinlichkeitsdichtefunktion zurückgegriffen werden, da die Verteilungsfunktion den Wert des Integrals über die Wahrscheinlichkeitsdichtefunktion von minus unendlich bzw. der unteren Grenze des Definitionsintervalls der Wahrscheinlichkeitsdichtefunktion bis zu dem betreffenden Schwellwert darstellt. Die maßgebliche Fläche unter der Wahrscheinlichkeitsdichtefunktion, d.h. der Wert des Integrals bzw. der Wert der Verteilungsfunktion, entspricht somit der (theoretischen) Wahrscheinlichkeit, mit welcher ein maximaler bzw. minimaler Wert einer Eigenschaft der Regionen eines Bildes eines Gutprodukts kleiner oder gleich dem betreffenden Schwellwert ist. Soll die Wahrscheinlichkeit berechnet werden, mit der ein maximaler bzw. minimaler Wert größer oder gleich dem Schwellwert ist, so muss hierzu lediglich die so berechnete Wahrscheinlichkeit von 1 subtrahiert werden.

Da für diese Berechnungen der Wert der Fläche bzw. des Integrals bzw. der Verteilungsfunktion vorgegeben wird, muss die entsprechende Umkehrfunktion verwendet werden. Diese Berechnungen können entweder analytisch oder mittels eines numerischen Verfahrens erfolgen.

Nach diesem bekannten Verfahren können die Regionen mittels eines Basis-Schwellwertes festgelegt werden, wobei benachbarte Pixel, deren Pixelwert größer (oder gleich) dem Basis-Schwellwert ist, eine erste Gruppe von Regionen bilden, und benachbarte Pixel, deren Pixelwert kleiner als der Basis-Schwellwert ist, eine zweite Gruppe von Regionen. Die erste und zweite Gruppe von Regionen können auch zu einer einzigen Gruppe zusammengefasst werden. Eine weitere Möglichkeit zur Festlegung der Regionen besteht in der Verwendung einer vordefinierten (geometrischen) Maske. Beispielsweise kann eine matrixartige Maske verwendet werden, welche ein z.B. quadratisches Raster (d.h. ein schachbrettartiges Raster) über das digitale Bild legt, wobei alle Pixel innerhalb eines Quadrates eine Region bilden. Selbstverständlich kann die Maske auch andere Unterteilungen bewirken, wobei nicht das gesamte Bild in Regionen aufgeteilt werden muss.

Den Regionen wird eine Eigenschaft zugeordnet, die sich mit einem Wert beschreiben lässt. Hierbei kann es sich insbesondere um geometrische Eigenschaften handeln, wie die Fläche, den Umfang oder den Durchmesser der Regionen (wenn diese zumindest annähernd kreisförmig sind), oder um Pixelwert-Eigenschaften, die durch einen Wert beschrieben werden, der sich aus den Pixelwerten der betreffenden Region ergibt, wie z.B. der maximale oder minimale Wert einer Region, der Durchschnittswert oder die Varianz der Pixelwerte.

Es können auch mehrere Eigenschaften kombiniert werden, die sich dann durch einen kombinierten Wert beschreiben lassen. Beispielsweise können der Mittelwert und die Standardabweichung addiert werden, wobei diese Information eine Art Konfidenzintervall für die Pixelwerte darstellt. Es kann auch die Differenz der Maxima und Minima als kombinierter Wert verwendet werden, welcher die Helligkeitsdifferenz der Region beschreibt. Da dieses Maß gegen Ausreißer empfindlich ist, können stattdessen Quantile verwendet werden, beispielsweise die Quantile bei 10 % und 90 % als Alternative zu Maxima und Minima. Weiterhin kann der Quotient aus Umfang und Fläche verwendet werden, um darauf zu schließen, wie gut kreisförmig die Region ist bzw. wie weit sie von einer Kreisförmigkeit abweicht. Es können aber auch geometrische und Pixelwert-Eigenschaften kombiniert werden.

Dieses bekannte Verfahren bietet somit die Möglichkeit, eine Rate, insbesondere eine Fehlauswurfrate (oder die betreffende komplementäre Rate, also die Rate, mit der Bilder korrekterweise als fehlerfrei erkannt werden) vorzugeben und abhängig hiervon einen Schwellwert für das Erkennen einer Minimal- oder Maximalanomalie zu bestimmen.

In der Praxis ist es jedoch oftmals wünschenswert oder erforderlich, neben der Fehlauswurfrate auch die tatsächliche Detektionsrate zu kennen oder zumindest einen Prognosewert hierfür. Während die tatsächliche Fehlauswurfrate in der Praxis relativ einfach, wenn auch aufwändig, durch die manuelle Einzelbegutachtung von tatsächlich ausgeworfenen Produkten ermittelt werden kann, ist diese für die Detektionsrate kaum möglich. Hierfür ist es beispielsweise bekannt, Bilder von tatsächlichen Schlechtprodukten daraufhin zu untersuchen, ob die in diesen enthaltenen Anomalien mit einem vorbekannten Schwellwert mit ausreichender Sicherheit bzw. Wahrscheinlichkeit, d.h. ausreichend hoher Detektionsrate erkannt werden.

Ausgehend von diesem Stand der Technik liegt der Erfindung die Aufgabe zugrunde, ein Verfahren zur Detektion von Anomalien in digitalen Bildern von Produkten zu schaffen, welches auf einfache Weise und mit geringem Aufwand das Bestimmen zumindest eines Schätzwertes für die Detektionsrate für die Erkennung von Anomalien ermöglicht. Weiterhin liegt der Erfindung die Aufgabe zugrunde, eine Vorrichtung sowie ein Computerprogrammprodukt zur Durchführung des Verfahrens zu schaffen.

Die Erfindung löst diese Aufgabe mit den Merkmalen des Patentanspruchs 1 bzw. 14 und 15. Weitere Ausgestaltungen der Erfindung ergeben sich aus den abhängigen Ansprüchen.

Die Erfindung geht von der Erkenntnis aus, dass durch das Erstellen von digitalen Bildern von gleichartigen Produkten (bzw. eines gleichartigen Produkts, wenn es sich um ein kontinuierlich produziertes Produkt, beispielsweise ein Schüttgut, handelt), in welchen wenigstens eine vorbekannte Anomalie enthalten ist, die durch einen vorbekannten (physischen oder virtuellen) Störgegenstand erzeugt wird, eine Aussage über eine im aktiven Betrieb einer Inspektionsvorrichtung zu erwartende Detektionsrate getroffen werden kann bzw. ein Schätzwert hierfür ermittelt werden kann.

Unter gleichartigen Produkten werden dabei solche Produkte verstanden, die beispielsweise im Rahmen einer Serienproduktion hergestellt werden, beispielsweise in Bechern abgefüllter Joghurt oder in Tüten oder festen Kartons verpackte Kekse oder dergleichen. Bei der Inspektion derartiger Produkte muss festgestellt werden, ob darin unerwünschte Störgegenstände enthalten sind, beispielsweise Verunreinigungen, Metallsplitter, kleine Steinchen, Knochensplitter oder dergleichen. Die Inspektionsvorrichtung erstellt dabei üblicherweise digitale Bilder der Produkte, die dann durch eine geeignete automatisierte Auswertung auf das Vorliegen von Anomalien untersucht werden, die durch unerwünschte Störgegenstände verursacht sind.

Hierzu wird das digitale Bild als eine einzige Region aufgefasst oder in mehrere Regionen unterteilt, wobei jede Region aus einem oder mehreren benachbarten Pixeln besteht. Für jede solche Region wird ein Wert für wenigstens eine Eigenschaft der Region oder ein kombinierter Wert für mehrere Eigenschaften der Region bestimmt. Beispielsweise kann ein mittlerer Helligkeitswert (Grauwert) für die Region bestimmt werden. Das Vorliegen einer Anomalie wird erkannt, wenn der betreffende Wert der Eigenschaft größer ist als ein vorgegebener Maximal-Schwellwert oder als ein vorgegebener Minimal-Schwellwert.

Wie bereits vorstehend erwähnt, kann der Maximal-Schwellwert bzw. der Minimal-Schwellwert unmittelbar vorgegeben oder nach dem Verfahren gemäß der europäischen Patentanmeldung mit der Anmeldenummer 23166616 aus einem Vorgabewert für die Fehlauswurfrate (bzw. die hierzu komplementäre Rate) bestimmt werden.

Erfindungsgemäß werden in einem Prüfprozess folgende Schritte ausgeführt:

- Erzeugen einer Mehrzahl von digitalen Schlechtbildern von realen oder fiktiven Schlechtprodukten, die jeweils wenigstens eine vorbekannte Anomalie aufweisen;

- für jedes Schlechtbild, Festlegen der Region oder der Regionen und Bestimmen des Wertes der mindestens einen Eigenschaft oder des kombinierten Wertes für mehrere Eigenschaften jeder Region und Bestimmen des maximalen Wertes dieser Werte als Maximal-Stichprobenwert einer Maximalwert-Stichprobe oder Bestimmen des minimalen Wertes dieser Werte als Minimal-Stichprobenwert einer Minimalwert-Stichprobe;

- Bestimmen einer Detektionsrate für die wenigstens eine vorbekannte Anomalie

  o durch Bestimmen von Schätzwerten für alle freien, nicht vorgegebenen Parameter einer zur Beschreibung der Maximalwert-Stichprobe oder der Minimalwert-Stichprobe vorgegebenen Wahrscheinlichkeitsdichtefunktion (Parametrieren) unter Verwendung der Maximal-Stichprobenwerte oder der Minimal-Stichprobenwerte und unter Verwendung eines statistischen Schätzverfahrens, und

  ◦ durch Integration der parametrierten Wahrscheinlichkeitsdichtefunktion unter Verwendung des vorgegebenen Maximal-Schwellwertes oder Minimal-Schwellwertes als Integrationsgrenze, oder

- Bestimmen einer Detektionsrate als Verhältnis der Anzahl der Werte der Maximalwert-Stichprobe oder der Minimalwert-Stichprobe, welche größer oder gleich dem vorgegebenen Maximal-Schwellwert oder kleiner oder gleich dem vorgegebenen Minimal-Schwellwert sind, und der Gesamtanzahl der Werte der Maximalwert-Stichprobe oder der Minimalwert-Stichprobe; und

- Zuordnen der Detektionsrate zu der wenigstens einen vorbekannten Anomalie.

Durch das Zuordnen der so ermittelten Detektionsrate zu der wenigstens einen vorbekannten Anomalie ergibt sich für die Bedienperson einer Inspektionsvorrichtung, beispielsweise einer Röntgeninspektionsvorrichtung, in welcher dieses Verfahren implementiert ist, der Vorteil, dass die Auswirkung des vorangestellten Schwellwertes bzw. der diesem Schwellwert zugrunde liegenden Fehlauswurfrate (als vorgegebene Größe) auf die Detektionsrate sofort erkennbar wird.

Auf diese Weise kann der Schwellwert bzw. die Fehlauswurfrate so gewählt werden, dass die Detektionsrate für die vorbekannten Anomalien in Bildern von Gutprodukten, die mit der Inspektionsvorrichtung im praktischen Betrieb tatsächlich auf das Vorliegen von nicht vorbekannten Anomalien untersucht werden sollen, den wirtschaftlichen Anforderungen und den Anforderungen an die Sicherheit, soweit möglich, genügt. Denn diese beiden Parameter sind häufig gegeneinander abzuwägen. Wünschenswert ist selbstverständlich eine Fehlauswurfrate von 0 % und eine Detektionsrate von 100 %, was in der Praxis kaum bzw. nicht erreichbar ist. In wirtschaftlicher Hinsicht ist eine möglichst niedrige Fehlauswurfrate wünschenswert. Erreicht werden kann dies für die Erkennung von Maximal-Anomalien durch einen möglichst hohen Schwellwert, was jedoch im Gegenzug die Detektionsrate bzw. die Wahrscheinlichkeit für eine zutreffende Detektion einer Maximal-Anomalie reduziert. Handelt es sich bei den zu detektierenden Störgegenständen um gefährliche Gegenstände, beispielsweise Metallsplitter oder Knochensplitter in Lebensmitteln, so muss die Detektionsrate entsprechend hoch sein, beispielsweise 99 % und höher, um Regressansprüche von Endverbrauchern, die bei einem Verzehr derart verunreinigte Lebensmittel verletzt werden, möglichst zu vermeiden. Dagegen kann eine zu hohe Fehlauswurfrate für den Hersteller von Produkten wirtschaftlich extrem nachteilig sein, wenn der Aufwand für eine manuelle Nachkontrolle von fälschlicherweise ausgeworfenen inspizierten Produkten aufwändig und damit kostenintensiv ist.

Mit der Erfindung ist es möglich, die Fehlauswurfrate auf der einen Seite und die Detektionsrate auf der anderen Seite durch die Vorgabe eines einzigen Parameters, nämlich entweder unmittelbar den jeweiligen Maximal-Schwellwert oder Minimal-Schwellwert oder die Fehlauswurfrate (oder die hierzu komplementäre Rate) so einfach und schnell zu festzulegen, dass dies den Anforderungen an die Wirtschaftlichkeit und/oder Sicherheit genügt.

In der Praxis wird dieses Verfahren selbstverständlich umso zutreffendere Ergebnisse liefern, umso besser die vorbekannten Anomalien mit den tatsächlich auftretenden Anomalien bzw. die vorbekannten (physischen oder virtuellen) Störgegenstände mit den tatsächlich auftretenden Störgegenständen übereinstimmen.

Nach einer Ausgestaltung der Erfindung wird der Maximal-Schwellwert bzw. der Minimal-Schwellwert in einem Einlernprozess bestimmt, wobei folgende Schritte ausgeführt werden:

- Erzeugen oder Verwenden einer Anzahl von digitalen Bildern von Gutprodukten, welche keine Anomalie enthalten, oder von Gut-Prozessprodukten, welche überwiegend keine Anomalie enthalten, wobei die Anzahl der Bilder vorgegeben ist oder im Verlauf des Einlernprozesses bestimmt wird;

- für jedes der digitalen Bilder, Festlegen der Region oder der Regionen und Bestimmen des Wertes der mindestens einen Eigenschaft oder des kombinierten Wertes für mehrere Eigenschaften jeder Region und Bestimmen des maximalen Wertes dieser Werte als Maximal-Stichprobenwert einer Maximalwert-Stichprobe und/oder Bestimmen des minimalen Wertes dieser Werte als Minimal-Stichprobenwert einer Minimalwert-Stichprobe;

- unter Verwendung eines statistischen Schätzverfahrens, Bestimmen von Schätzwerten für alle freien, nicht vorgegebenen Parameter einer zur Beschreibung der Maximalwert-Stichprobe vorgegebenen Wahrscheinlichkeitsdichtefunktion unter Verwendung der Maximal-Stichprobenwerte und/oder Bestimmen von Schätzwerten für alle freien, nicht vorgegebenen Parameter einer zur Beschreibung der Minimalwert-Stichprobe vorgegebenen Wahrscheinlichkeitsdichtefunktion unter Verwendung der Minimal-Stichprobenwerte;

• Vorgeben einer ersten Rate, mit der in zu untersuchenden Bildern fälschlicherweise eine Maximal-Anomalie detektiert wird, oder einer zweiten Rate, mit der in zu untersuchenden Bildern richtigerweise keine Maximal-Anomalie erkannt wird, und/oder Vorgeben einer dritten Rate, mit der in zu untersuchenden Bildern fälschlicherweise eine Minimal-Anomalie detektiert wird, oder einer vierten Rate, mit der in zu untersuchenden Bildern richtigerweise keine Minimal-Anomalie erkannt wird,

• Bestimmen des Maximal-Schwellwertes unter Verwendung der parametrierten Wahrscheinlichkeitsdichtefunktion oder einer ihr entsprechenden Verteilungsfunktion so, dass die Wahrscheinlichkeit für das Auftreten eines maximalen Wertes, der größer oder gleich dem Maximal-Schwellwert ist, der vorgegebenen ersten Rate entspricht oder dass die Wahrscheinlichkeit für das Auftreten eines maximalen Wertes, der kleiner oder gleich dem Maximal-Schwellwert ist, der vorgegebenen zweiten Rate entspricht, und/oder

• Bestimmen des Minimal-Schwellwertes unter Verwendung der parametrierten Wahrscheinlichkeitsdichtefunktion oder einer dieser entsprechenden Verteilungsfunktion so, dass die Wahrscheinlichkeit für das Auftreten eines minimalen Wertes, der kleiner oder gleich dem Minimal-Schwellwert ist, der vorgegebenen dritten Rate entspricht oder dass die Wahrscheinlichkeit für das Auftreten eines minimalen Wertes, der größer oder gleich dem Minimal-Schwellwert ist, der vorgegebenen vierten Rate entspricht.

Hierbei handelt es sich grundsätzlich um das in der europäischen Patentanmeldung mit der Anmeldenummer 23166616 beschriebene Verfahren, wobei die Fehlauswurfrate bzw. die hierzu komplementäre Rate vorgegeben wird. Der Vorteil dieses Verfahrens gegenüber der unmittelbaren Vorgabe des Schwellwertes ist selbstverständlich darin zu sehen, dass hier eine der in der Praxis relevanten Größen, nämlich die Fehlauswurfrate, vorgegeben wird und nicht ein zunächst beliebiger Schwellwert, dessen Auswirkung sowohl auf die Fehlauswurfrate als auch auf die Detektionsrate nicht ohne weiteres vorhergesagt werden kann.

Nach einer Ausgestaltung der Erfindung wird als Eigenschaft einer Region eine geometrische Eigenschaft verwendet, die aus der Ortsinformation der Pixel der Region ermittelt wird, insbesondere die Fläche, der Umfang oder der Durchmesser. Weiterhin kann als Eigenschaft einer Region eine Pixelwert-Eigenschaft verwendet werden, die aus den Werten der Pixel der Region ermittelt wird, insbesondere der Maximalwert oder der Minimalwert aller Pixel der Region, der Mittelwert, die Varianz oder Standardabweichung.

In der Praxis wird man als Eigenschaft einer Region eine Größe verwenden, unter deren Verwendung die beim praktischen Betrieb einer Inspektionsvorrichtung bzw. bei der praktischen Anwendung des erfindungsgemäßen Verfahrens zu detektierenden (nicht vorbekannten) Störgegenstände bzw. die hierdurch hervorgerufenen (nicht vorbekannten) Anomalien am zuverlässigsten detektiert werden.

Wird der Maximal-Schwellwert bzw. Minimal-Schwellwert nicht unmittelbar vorgegeben, sondern aus einer vorgegebenen Fehlauswurfrate ermittelt, so kann als hierfür erforderliche vorgegebene Wahrscheinlichkeitsverteilung die verallgemeinerte Extremwertverteilung gewählt bzw. verwendet werden, insbesondere deren Spezialfälle, die Gumbel-Verteilung, die Weibull-Verteilung oder die Fréchet-Verteilung. Denn die verallgemeinerte Extremwertverteilung ist hervorragend geeignet, um Wahrscheinlichkeitsverteilungen von praktisch auftretenden Extremwerten zu beschreiben.

Nach einer Ausgestaltung der Erfindung werden die für den Prüfprozess erforderlichen digitalen Schlechtbilder so erzeugt, dass sich die wenigstens eine vorgegebene Anomalie an einer vorgegebenen Position innerhalb des Schlechtbildes befindet. Damit kann diese Information und optional auch die Geometrie des wenigstens eine vorgegebene Anomalie verursachenden Störgegenstandes zur Bestimmung des diese vorgegebene Anomalie repräsentierenden Maximal-Stichprobenwertes oder Minimal-Stichprobenwertes verwendet werden.

Beispielsweise kann der die wenigstens eine vorgegebene Anomalie erzeugende Störgegenstand so an oder in dem zu inspizierenden Gutprodukt positioniert werden (welches nach dem Anbringen bzw. Einbringen des Störgegenstandes ein Schlechtprodukt darstellt), dass er sich - in einer Bildebene senkrecht zur Durchstrahlungsrichtung - im oberen rechten Viertel des betreffenden digitalen Bildes befindet. Das Detektieren des jeweiligen Maximal- bzw. Minimal-Stichprobenwertes kann dann beispielsweise auf dieses obere rechte Viertel des digitalen Bildes beschränkt werden. Hierdurch wird die Wahrscheinlichkeit reduziert, dass in dem digitalen Bild in einer Region außerhalb der vorgegebenen Anomalie ein Stichprobenwert ermittelt wird, der größer bzw. kleiner ist als der Maximal- bzw. Minimal-Stichprobenwert, der tatsächlich durch die Anomalie bzw. den betreffenden Störgegenstand verursacht ist.

Die für die Bildauswertung tatsächlich verwendete Region bzw. der tatsächlich verwendete Bildausschnitt kann auch unter Verwendung eines Basis-Schwellwertes bestimmt werden. Hierdurch können beispielsweise alle Regionen eines Bildes bestimmt werden deren Pixelwerte größer oder gleich sind als der vorgegebene Basis-Schwellwert. Dann kann geprüft werden, ob eine ausreichend große Überlappung besteht zwischen einer so bestimmten Region und den vorbekannten geometrischen Außenabmessungen des betreffenden Störgegenstands (bzw. dessen geometrischen Außenabmessungen in einer Projektion in die Bildebene). Beispielsweise kann geprüft werden, ob der Störgegenstand mit seiner gesamten Projektionsfläche innerhalb einer so bestimmten Region liegt oder mit einem Anteil von mehr als ein vorbestimmter Überlappungs-Schwellwert.

Wie bereits vorstehend erwähnt, kann nach einer Ausgestaltung der Erfindung kann zur Erzeugung eines Schlechtbildes ein Gutprodukt verwendet werden, welches keine Anomalie enthält, wobei an oder in dem Gutprodukt wenigstens ein Störgegenstand vorgesehen ist, so dass aus dem Gutprodukt ein Schlechtprodukt mit wenigstens einem vorbekannten Störgegenstand entsteht. Weiterhin kann der wenigstens eine Störgegenstand auch an oder in einem Träger vorgesehen sein, welcher an dem Produkt befestigt oder in diesem angeordnet wird.

Nach einer anderen Ausgestaltung der Erfindung können zur Erzeugung eines Schlechtbildes digitale Bilddaten eines Gutproduktes verwendet werden, wobei die digitalen Bilddaten des Gutproduktes unter Verwendung von bekannten Material- und Geometrieeigenschaften wenigstens eines vorgegebenen Störgegenstandes zur Einrechnung des wenigstens einen Störgegenstandes digital transformiert werden. Mit anderen Worten, in das digitale Bild eines Gutprodukts wird eine vorbekannte Anomalie "eingerechnet" bzw. "eingeblendet". Diese Variante bietet sich insbesondere dann an, wenn ein Störgegenstand aus einem einzigen Material besteht und eine einfache geometrische Struktur aufweist, beispielsweise eine Kugel, ein Quader oder ein Würfel. Das "Einrechnen" kann bei einer Inspektionsvorrichtung, welche die zu inspizierenden Produkte durchstrahlt, derart erfolgen, dass unter Verwendung einer vorbekannten materialabhängigen spezifischen Dämpfung für die Strahlung, welche für die Inspektion verwendet wird, die Zusatzdämpfung bestimmt und diese zusätzlich zu der Dämpfung, die durch die Bilddaten des Gutbildes repräsentiert ist, berücksichtigt werden. Bei Verwendung eines logarithmischen Maßstabs für die Dämpfung kann dies durch einfache Addition erfolgen.

Der Träger für den wenigstens einen Störgegenstand kann plattenförmig oder kartenförmig ausgebildet sein. In oder auf dem Träger können auch mehrere Störgegenstände mit identischen Materialeigenschaften, insbesondere aus einem einzigen Material, mit gleichartiger Geometrie, jedoch unterschiedlicher Größe angeordnet sein. Auf diese Weise können Schlechtbilder mit mehreren vorbekannten Anomalien erzeugt werden. Die Auswertung kann dann so erfolgen, dass jeweils nur eine (in der vorstehend beschriebenen Art und Weise) bestimmte Region bzw. ein bestimmter Ausschnitt des Schlechtbilder des für das Bestimmen eines entsprechenden Maximal- bzw. Minimal-Schwellwertes verwendet wird.

Nach einer Ausführungsform der Erfindung kann die Detektionsrate als Zahlenwert oder eine damit zusammenhängende Größe oder Kennzeichnung auf einer Anzeigevorrichtung ausgegeben werden.

Die Detektionsrate kann dabei auch einer grafischen Darstellung des wenigstens einen Störgegenstandes zugeordnet dargestellt und/oder dem zugehörigen Schlechtbild zugeordnet dargestellt werden. Beispielsweise kann bei der Verwendung von vorbekannten Anomalien, die durch unterschiedlich große Kugeln aus demselben Material verursacht werden (unabhängig davon, ob diese Anomalien mit physischen Störgegenständen erzeugt wurden oder durch "Einrechnen"), zu jeder Darstellung einer Kugel mit einer entsprechenden Materialbezeichnung der betreffende Wert der Detektionsrate angezeigt werden. Anstelle oder zusätzlich zu der Darstellung des Störgegenstands kann auch das Gutbild oder ein die Anomalie beinhaltender Bildausschnitt dargestellt werden.

Nach einer weiteren Ausgestaltung der Erfindung kann der Maximal-Schwellwert bzw. der Minimal-Schwellwert oder die Fehlauswurfrate (bzw. die hierzu komplementäre Rate) für das Erkennen einer Maximal- bzw. Minimal-Anomalie mittels eines Eingabemittels, beispielsweise einer Tastatur, oder Einstellmittels, beispielsweise eines (physischen oder digital realisierten) Schiebers oder Drehknopfes, veränderbar sein. Weiterhin kann auf der Anzeigevorrichtung zu jedem aktuellen Wert für den Maximal-Schwellwert oder Minimal-Schwellwert oder die betreffende Rate ein aktueller Wert für die Detektionsrate dargestellt werden.

Durch diese Maßnahmen kann die Bedienperson ein Gefühl dafür entwickeln, wie und mit welcher Sicherheit das Erkennen von vorbekannten Störgegenständen bzw. vorbekannten Anomalien erfolgt.

Anstelle einer Angabe der Detektionsrate als Zahlenwert kann diese auch mittels eines Klassifikators bewertet werden, beispielsweise unter Verwendung eines Farbcodes. Beispielsweise kann die Farbe Rot für eine zu schlechte Detektionsrate gewählt werden (abhängig von den jeweiligen Umständen, beispielsweise kleiner als 50 %), die Farbe Gelb für eine noch akzeptable Detektionsrate (beispielsweise größer oder gleich 50 % und kleiner oder gleich 90 %) und die Farbe Grün für eine hohe Detektionsrate, die eine ausreichend zuverlässige Detektion von Anomalien gewährleistet (beispielsweise >90 %).

Eine für eine erfindungsgemäße Vorrichtung geeignete Datenverarbeitungseinrichtung kann in üblicher Weise einen Prozessor mit geeigneten Eingabe- und Ausgabeschnittstellen aufweisen. Der Prozessor kann beispielsweise als spezieller Prozessor für die industrielle Bildverarbeitung ausgebildet sein. Selbstverständlich kann der Prozessor auch durch eine Kombination eines üblichen Prozessors mit einem speziellen Bildverarbeitungsprozessor realisiert sein. Die gesamte Datenverarbeitungseinrichtung kann auch als eigenständige CPU-Einheit mit entsprechenden Schnittstellen realisiert sein, beispielsweise auch als Slot-CPU.

Es sei an dieser Stelle darauf hingewiesen, dass sämtliche vorstehend beschriebene Merkmale des Verfahrens bzw. der Vorrichtung gemäß der europäischen Patentanmeldung mit der Anmeldenummer 23166616 auch in Verbindung mit der vorliegenden Erfindung verwendet werden können.

Die Erfindung wird nachstehend anhand von in der Zeichnung dargestellten Ausführungsbeispielen näher erläutert. In der Zeichnung zeigen:

Fig. 1    eine schematische Darstellung einer Röntgeninspektionsvorrichtung mit einer Vorrichtung zur Durchführung des Verfahrens nach der Erfindung;

Fig. 2    ein Diagramm, das die empirische Häufigkeitsverteilung einer Stichprobe von maximalen Werten einer Eigenschaft von zuvor bestimmten Regionen in digitalen Bildern von Gutprodukten zeigt, sowie eine an diese gefittete Wahrscheinlichkeitsdichtefunktion;

Fig. 3    ein Diagramm, das jeweils eine Wahrscheinlichkeitsdichtefunktion für minimale und maximale Werte einer Eigenschaft zeigt, die unter Verwendung von digitalen Bildern von Gutprodukten (oder Gut-Prozessprodukten) bestimmt wurden;

Fig. 4    ein Diagramm, das eine Wahrscheinlichkeitsdichtefunktion (Kurve (a)) für maximale Werte einer Eigenschaft zeigt, die unter Verwendung von digitalen Bildern von Gutprodukten (oder Gut-Prozessprodukten) bestimmt wurden, und eine zweite Wahrscheinlichkeitsdichtefunktion (Kurve (b)) für maximale Werte einer Eigenschaft, die unter Verwendung von digitalen Bildern von Schlechtprodukten mit jeweils einer vorbekannten Anomalie bestimmt wurden;

Fig. 5    ein Diagramm ähnlich Fig. 4, wobei die Kurven (a) und (b) einen größeren Abstand auf der Abszisse aufweisen, so dass eine höhere Detektionsrate bei gleichzeitig geringerer Fehlauswurfrate möglich ist;

Fig. 6    eine Darstellung einer Anzeige einer Anzeigevorrichtung, wobei für drei verschiedene Materialien jeweils sechs gleichartige Störgegenstände unterschiedlicher Größe dargestellt sind und jedem Störgegenstand ein Zahlenwert der Detektionsrate zugeordnet ist;

Fig. 7    eine Darstellung einer Anzeige einer Anzeigevorrichtung ähnlich Fig. 6, wobei jedem Störgegenstand Smiley-Symbol für die Detektionsrate zugeordnet ist;

Fig. 8    eine Darstellung einer Anzeige einer Anzeigevorrichtung ähnlich Fig. 6, wobei für die drei verschiedenen Materialien jeweils nur diejenige Störgegenstandsgröße dargestellt sind, welche mit einer Detektionsrate größer als 95 % detektierbar ist;

Fig. 9    eine Darstellung einer Anzeige einer Anzeigevorrichtung ähnlich Fig. 6, wobei zusätzlich ein Einstellmittel für die Fehlauswurfrate in Form eines digitalen Schiebers vorgesehen ist.

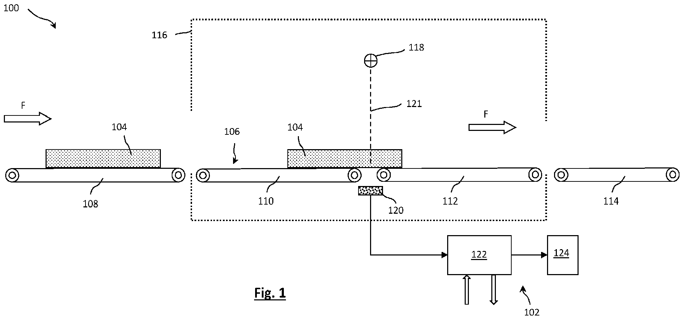

In Fig. 1 ist schematisch eine Röntgeninspektionsvorrichtung 100 mit einer Vorrichtung 102 zur Detektion von Anomalien in digitalen Bildern dargestellt, welche zur Durchführung des nachstehend beschriebenen Verfahrens ausgebildet ist. Die Röntgeninspektionsvorrichtung 100 ist dabei lediglich ein mögliches Beispiel, wie digitale Bilder, die Anomalien enthalten können, generiert werden können. Es ist möglich, das erfindungsgemäße Verfahren auf beliebige digitale Bilder anzuwenden, die auf das Vorhandensein von Anomalien untersucht werden sollen.

Wie bereits vorstehend ausgeführt, werden die digitalen Bilder üblicherweise Produkte darstellen, welche ihrerseits die zu detektierenden Anomalien aufweisen. Im Fall der in Fig. 1 dargestellten Röntgeninspektionsvorrichtung werden als Beispiel Produkte 104 in Form von Stückgütern untersucht. Es ist jedoch ebenso möglich, digitale Bilder von beliebigen anderen Produkten zu erzeugen, beispielsweise von Schüttprodukten. In diesem Fall bietet es sich an, dass digitale Bilder erzeugt werden, die jeweils einen Abschnitt des Schüttprodukts darstellen.

Bei der in Fig. 1 dargestellten Röntgeninspektionsvorrichtung 100 werden die zu untersuchenden Produkte 104 mittels einer Fördereinrichtung 106 entlang eines vorgegebenen Förderwegs (angedeutet durch den Pfeil F) transportiert. Die Fördereinrichtung 106 weist dabei mehrere Transportbänder 108, 110, 112, 114 auf. Das Transportband 108 dient zum Zufördern der Produkte 104 und das Transportband 114 zum Abfördern der Produkte. Die Inspektionsvorrichtung 100 weist ein Abschirmgehäuse 116 auf, in welchem die Transportbänder 110 und 112 angeordnet sind, sowie eine Röntgenstrahlungsquelle 118 und einen Röntgenstrahlungsdetektor 120. Die Röntgenstrahlungsquelle 118 erzeugt einen Röntgenstrahl 121, der senkrecht zur Zeichenebene eine fächerartige Gestalt besitzt und in Förderrichtung eine geringe Breite aufweist. Der Röntgenstrahl 121 tritt durch einen Spalt bzw. Freiraum zwischen den einander zugewandten Stirnseiten der Transportbänder 110 und 112 hindurch und trifft dann auf den Röntgenstrahlungsdetektor 120, der bei der in Fig. 1 dargestellten Ausführungsform der Röntgeninspektionsvorrichtung 100 unterhalb der Transportbänder 110, 112 angeordnet ist. Der Röntgenstrahlungsdetektor 120 weist eine Breite auf, welche in der Richtung senkrecht zur Zeichenebene der maximalen Breite der zu untersuchenden Produkte entspricht. Üblicherweise wird die Breite des Röntgenstrahlungsdetektors in etwa so groß gewählt wie die Breite der Transportbänder 110, 112. Der Röntgenstrahlungsdetektor 120 kann als Zeilendetektor ausgebildet sein, welcher in der Richtung senkrecht zur Zeichenebene eine oder mehrere Detektorzeilen aufweist, wobei jede Detektorzeile eine vorgegebene Anzahl von Pixeln aufweist.

Die Vorrichtung 102 zur Detektion von Anomalien weist eine Bildverarbeitungseinheit 122 auf, welcher das Signal des Röntgenstrahlungsdetektors 120 zugeführt ist. Die Bildverarbeitungseinheit 122 kann als übliche Computereinheit mit einem oder mehreren Prozessoren, einem Arbeitsspeicher und gegebenenfalls einem Festplattenspeicher oder SSD-Speicher sowie geeigneten Schnittstellen für das Zuführen des Signals des Röntgenstrahlungsdetektors 120 sowie für das Zuführen bzw. Empfangen und Abführen bzw. Senden von weiteren Daten ausgebildet sein. Weiterhin kann die Vorrichtung 102 eine Anzeigeeinheit 124 aufweisen, auf welcher Informationen angezeigt werden können, die von der Bildverarbeitungseinheit 122 generiert oder dieser zugeführt wurden.

Wie in Fig. 1 schematisch dargestellt, werden die zu untersuchenden Produkte 104 durch den fächerartigen Röntgenstrahl 121 bewegt, wodurch mittels des Röntgenstrahlungsdetektors 120, welcher als Zeilendetektor ausgebildet ist, ein entsprechendes digitales Bildsignal erzeugt wird, welches der Bildverarbeitungseinheit 122 zugeführt ist. Die Bildverarbeitungseinheit 122 kann so ausgebildet sein, dass zunächst aus dem Bildsignal ein digitales Bild erzeugt wird, welches, im Fall eines Stückguts, das komplette Produkt 104 beinhaltet oder zumindest einen vorgegebenen Ausschnitt. Der Ausschnitt kann mit üblichen Methoden der Bildverarbeitung bzw. Mustererkennung gewählt werden. Die Bildverarbeitungseinheit 122 kann aus dem so erzeugten digitalen Bild das endgültige digitale Bild, welches mit dem nachstehend beschriebenen Verfahren auf das Vorhandensein von Anomalien untersucht werden soll, auch einer weiteren Bildverarbeitung unterziehen, beispielsweise einer digitalen Filterung, die so gewählt ist, dass zu detektierende Anomalien besser erkennbar sind, insbesondere gegenüber dem Restbild besser hervortreten. Eine derartige Bildvorverarbeitung kann auch beliebige weitere Bildverarbeitungsschritte umfassen, beispielsweise eine Rauschunterdrückung oder dergleichen. Am Ende einer derartigen (nicht zwingend erforderlichen) Bildvorverarbeitung steht das digitale Bild, welches dann auf das Vorliegen von Anomalien untersucht werden soll.

Wie eingangs ausgeführt, ist es für das Detektieren von Anomalien bekannt, einen Schwellwert für die Pixelwerte zu verwenden. Das Vorliegen einer Anomalie wird in diesem Fall detektiert, wenn ein Pixelwert oder eine Gruppe von benachbarten Pixeln mit einer vorgegebenen Mindestanzahl von Pixeln einen Schwellwert überschreitet. Werden eine oder mehrere Anomalien in einem digitalen Bild detektiert, so kann diese Information verwendet werden, um eine Aktion in Bezug auf das zugehörige Produkt auszulösen, beispielsweise das Produkt aus einem Strom von Produkten auszuleiten. Stattdessen oder zusätzlich kann das betreffende Produkt auch physisch oder virtuell, d.h. durch das Zuordnen entsprechender Daten, markiert werden.

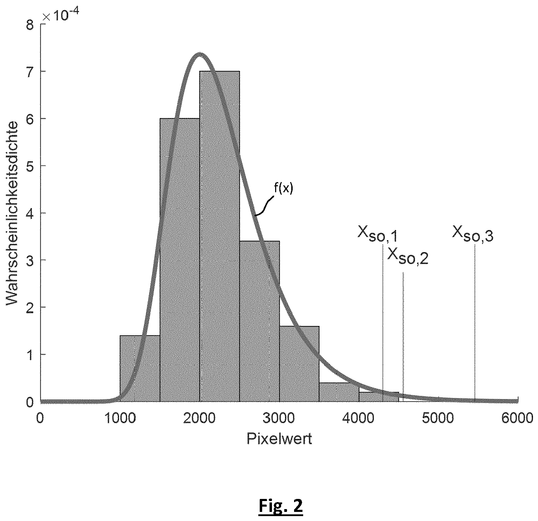

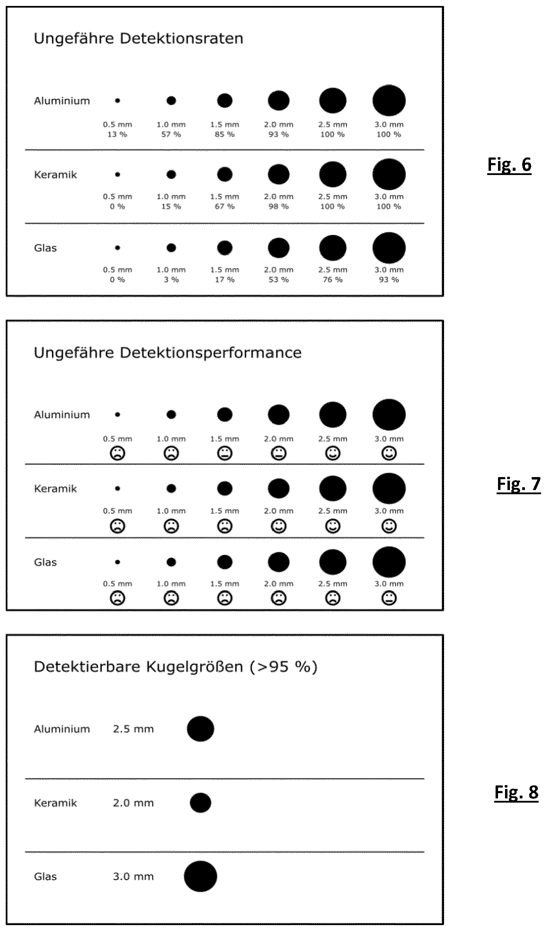

Die Anzeigeeinheit 124 kann dazu verwendet werden, gewünschte Informationen anzuzeigen, wie beispielsweise die zu untersuchenden digitalen Bilder mit gegebenenfalls darin detektierten Anomalien, den jeweils verwendeten Schwellwert, die Art einer gewählten Wahrscheinlichkeitsdichtefunktion und die zugehörigen Parameter, die Güte des Fits der Wahrscheinlichkeitsdichtefunktion an die Stichprobe, Konfidenzintervalle für die Schwellwerte, die Parameter oder die Raten (insbesondere die Fehlauswurfrate) und dergleichen. Die Ausgabe kann selbstverständlich in Form von Daten (Zahlenwerten) und/oder Grafiken erfolgen. Bei der Durchführung der Detektion im normalen Arbeitsmodus der Vorrichtung kann auch ein Diagramm angezeigt werden, welches den Verlauf der aktuellen Auswurfrate während des (normalen) Arbeitsbetriebs der Vorrichtung 102 (aber auch während des Einlernprozesses) über der Zeit darstellt, wobei auch die vorgegebene Rate (z.B. die Fehlauswurfrate) und das Konfidenzintervall für die vorgegebene Rate dargestellt werden. Weiterhin kann auch eine Liste mit den Stichprobenwerten und/der eine Grafik ähnlich Fig. 2 dargestellt werden. Weiterhin können Darstellungen angezeigt werden, wie sie in den Fig. 6 bis 9 dargestellt sind, also Informationen über die Detektionsrate von vorgegebenen Anomalien, die durch physische oder virtuelle Störgegenstände erzeugt wurden. Die betreffenden Daten können natürlich auch an eine übergeordnete Einheit ausgegeben und/oder gespeichert werden.

Der Bildverarbeitungseinheit 122 können auch ein oder mehrere Start-Schwellwerte zugeführt werden, die mit dem nachstehend beschriebenen Verfahren für einen gerade zu untersuchenden Produkttyp bereits ermittelt wurden, oder weitere Informationen, die für die Durchführung des nachstehend beschriebenen Verfahrens erforderlich sind, beispielsweise Informationen betreffend den zu verwendenden Typ der vorgegebenen Wahrscheinlichkeitsdichtefunktion(en) oder Informationen, in welcher Art und Weise Regionen in einem zu untersuchenden digitalen Bild definiert werden (siehe unten).

Wie vorstehend ausgeführt, beschränkt sich das nachstehend erläuterte Verfahren zur Detektion von Anomalien in digitalen Bildern nicht auf eine Prüfung, ob ein oder mehrere Pixelwerte einen vorgegebenen Maximal-Schwellwert überschreiten oder einen vorgegebenen Minimal-Schwellwert unterschreiten. Vielmehr kann das nachstehend beschriebene Verfahren zur Festlegung bzw. Bestimmung eines Maximal-Schwellwertes oder Minimal-Schwellwertes dahingehend verallgemeinert werden, dass ein Maximal-Schwellwert und/oder ein Minimal-Schwellwert für beliebige Eigenschaften von zuvor festgelegten Regionen in den zu untersuchenden digitalen Bildern bestimmt wird.

Hierzu müssen in einem zu untersuchenden digitalen Bild zunächst die Regionen definiert werden, denen jeweils der Wert einer vorgegebenen Eigenschaft zugeordnet werden kann. Das Definieren der Regionen kann beispielsweise so erfolgen, dass ein Basis-Schwellwert verwendet wird, wobei alle Pixelwerte, die gleich dem Schwellwert sind oder diesen überschreiten, eine erste Gruppe von Regionen bilden und die übrigen Pixelwerte eine zweite Gruppe von Regionen. Abhängig von der Eigenschaft, die untersucht werden soll, kann es genügen, dass jeweils nur die erste oder nur die zweite Gruppe weiterverarbeitet wird. Dies ist beispielsweise dann der Fall, wenn als Eigenschaft der Regionen nur der maximale oder der minimale Pixelwert oder der durchschnittliche Pixelwert der Regionen für das Erkennen einer Anomalie ausgewertet wird.

Es ist jedoch möglich, den Regionen auch eine oder mehrere Eigenschaften zuzuordnen, die sich nicht nur durch einzelne Pixelwerte beschreiben lassen. Beispielsweise können einer Region geometrische Eigenschaften wie beispielsweise Fläche, Umfang, Durchmesser (im Fall zumindest annähernd kreisförmiger Regionen) oder die Abweichung von der Kreisform zugeordnet werden. In einem solchen Fall wird eine Anomalie dann erkannt, wenn der Wert der betreffenden Eigenschaft einen hierfür vorgegebenen Maximal-Schwellwert überschreitet bzw. einen vorgegebenen Minimal-Schwellwert unterschreitet. Auch in diesem allgemeinen Fall können die hierfür erforderlichen Maximal- bzw. Minimal-Schwellwerte mit dem nachstehend erläuterten Verfahren bestimmt werden.

Eine andere Möglichkeit für das Bestimmen der Regionen in einem zu untersuchenden digitalen Bild besteht darin, eine vorgegebene geometrische Maske zu verwenden, die über das Bild gelegt wird. Hierbei kann es sich beispielsweise um eine Maske handeln, die aus gleich großen benachbarten Quadraten einer vorgegebenen Größe besteht.

Auch hier können jeder so definierten Region eine oder mehrere Eigenschaften zugeordnet werden, beispielsweise die Varianz oder Standardabweichung der von den Regionen umfassten Pixelwerte, der betreffende Durchschnittswert oder der darin enthaltene Maximalwert oder Minimalwert.

Es lassen sich auch kombinierte Werte für jede Region bestimmen, die aus zwei oder mehreren Werten für unterschiedliche Eigenschaften ermittelt werden. Beispielsweise können ein Wert für die Varianz oder Standardabweichung der Pixelwerte und ein Durchschnittswert zu einem kombinierten Wert zusammengefasst werden, insbesondere durch eine arithmetische Operation, beispielsweise (gewichtete) Addition, was in diesem speziellen Fall eine Art Konfidenzintervall darstellt, falls die Pixelwerte in dieser Region einigermaßen normal verteilt sind. Ein weiteres Beispiel für einen kombinierten Wert bzw. die Kombination von Eigenschaften der Regionen ist die Verwendung einer Differenz zwischen dem jeweils darin enthaltenen maximalen und minimalen Pixelwert. Um stabiler gegen Ausreißer zu sein, können auch Quantile verwendet werden, beispielsweise 90 % und 10 % Quantile statt des maximalen und minimalen Werts.

Im Folgenden wird beschrieben, wie ein entsprechender Maximal-Schwellwert bzw. Minimal-Schwellwert mit einer geringen Anzahl von digitalen Bildern bestimmt werden kann. Wie vorstehend erwähnt, kann ein solcher Einlernprozess mit Gutprodukten bzw. Gut-Prozessprodukten durchgeführt werden. Der Einlernprozess kann beispielsweise bei der Inbetriebnahme einer Anlage zur Herstellung oder Bearbeitung von Produkten, welche eine derartige Inspektionsvorrichtung umfasst, ausgeführt werden. Dabei wird es im Allgemeinen erforderlich sein, die Schwellwerte für jeden Produkttyp zu bestimmen.

Selbstverständlich können die Schwellwerte für bestimmte Produkttypen gespeichert werden, so dass der Einlernprozess nicht jedes Mal neu durchgeführt werden muss, wenn ein Wechsel des Typs der zu untersuchenden Produkte vorgenommen wird.

Es ist weiterhin möglich, den Einlernprozess während des laufenden Betriebs einer Anlage durchzuführen, zumindest dann, wenn davon ausgegangen werden kann, dass die Anlage Gut-Prozessprodukte erzeugt, d.h. Produkte, die überwiegend Gutprodukte darstellen (welche keine Anomalie beinhalten). Denn in diesem Fall können, wie nachstehend erläutert, die in den Gut-Prozessprodukten enthaltenen Schlechtprodukte als Ausreißer beim Erstellen der erforderlichen Stichprobe aussortiert werden.

Ein wesentliches Merkmal des nachstehend beschriebenen Verfahrens zur Bestimmung der Schwellwerte besteht darin, dass im Fall des Verwendens von Gutprodukten (mit nicht vorbekannten Detailinformationen) eine Rate vorgegeben wird, mit der in einem zu untersuchenden Bild fälschlicherweise eine Maximal-Anomalie detektiert werden soll (im Folgenden auch als Falsch-Positiv-Rate oder Fehlauswurfrate bezeichnet) oder mit der in einem zu untersuchenden Bild richtigerweise keine Maximal-Anomalie erkannt wird (im Folgenden auch als Richtig-Negativ-Rate bezeichnet). Es muss also nicht mehr in einem ersten Schritt ein Schwellwert bestimmt und in einem zweiten Schritt überprüft werden, ob sich bei einer Verwendung des betreffenden Schwellwertes eine entsprechende akzeptable Rate ergibt. Es ist jedoch grundsätzlich für die unten beschriebene Bestimmung der Detektionsrate für vorbekannte Anomalien ebenso möglich, eine Fehlauswurfrate (Falsch-Positiv-Rate) oder die hierzu komplementäre Richtig-Negativ-Rate unmittelbar anzugeben. Allerdings ist in diesem Fall eine wesentlich größere Anzahl von digitalen Bildern von Gutprodukten erforderlich, um den Schwellwert so zu wählen, dass eine gewünschte Fehlauswurfrate erreicht wird.

Die erforderliche Anzahl von digitalen Bildern, d.h. die Anzahl von Gutprodukten oder Gut-Prozessprodukten kann von vornherein festgelegt werden, wobei eine derartige Anzahl jedoch dann so hoch gewählt werden muss, dass ein Schwellwert mit der gewünschten Zuverlässigkeit bestimmt wird. Es ist jedoch auch möglich, die erforderliche Anzahl der digitalen Bilder im Verlauf des Einlernprozesses festzulegen (unabhängig davon, ob die Bilder während des Einlernprozesses erzeugt werden oder bereits vor dem Start des Einlernprozesses zur Verfügung stehen). Dabei bietet es sich an, zunächst mit einer Mindestanzahl von digitalen Bildern zu starten und diese Mindestanzahl schrittweise um eine oder mehrere digitale Bilder so lange zu erhöhen, bis der jeweils bestimmte Schwellwert ausreichend zuverlässig ist, d.h. die vorgegebene Rate ausreichend zuverlässig eingehalten wird. Dies kann durch das Bestimmen eines Konfidenzintervalls überprüft werden.

In einem nächsten Schritt werden, wie auch bei der Detektion von Anomalien in einem normalen Betriebsmodus (d.h. außerhalb des Einlernprozesses), für jedes der digitalen Bilder die Regionen festgelegt und für jede Region der Wert mindestens einer den Regionen jeweils zugeordneten Eigenschaft bestimmt. Für jedes digitale Bild wird dann der jeweils maximale Wert und/oder der minimale Wert der Eigenschaft oder der betreffenden Eigenschaften bzw. der kombinierte Wert für mehrere Eigenschaften ermittelt und einer entsprechenden Stichprobe zugeordnet. Dies kann beispielsweise dadurch erfolgen, dass alle minimalen Werte in einer Minimalwert-Liste und alle maximalen Werte in einer Maximalwert-Liste gespeichert werden. Dabei sei erwähnt, dass selbstverständlich nicht beide Alternativen des Verfahrens gleichzeitig verwendet sein müssen. Sollen im normalen Arbeitsbetrieb nur Maximal-Anomalien detektiert werden, d.h. Anomalien, die als solche erkannt werden, wenn ein Maximal-Schwellwert überschritten wird, so muss selbstverständlich nur ein Maximal-Schwellwert bestimmt werden. Analoges gilt für den Fall, dass nur Minimal-Anomalien detektiert werden sollen.

Wurde eine ausreichende Anzahl von Stichprobenelementen (maximalen bzw. minimalen Werten für die wenigstens eine Eigenschaft bzw. kombinierte Eigenschaft) bestimmt, so kann in einem weiteren Schritt unter Verwendung eines statistischen Schätzverfahrens eine für die Maximalwert-Liste bzw. Minimalwert-Liste jeweils vorgegebene Wahrscheinlichkeitsdichtefunktion parametriert werden. Dies entspricht dem Fitten der Wahrscheinlichkeitsdichtefunktion an die empirische Häufigkeitsverteilung der betreffenden Stichprobe.

Hierzu kann die Stichprobe gebinnt werden, d.h. die Stichprobenelemente werden jeweils gleich breiten, benachbarten Intervallen des zugehörigen Wertebereichs zugeordnet. An diese empirische (relative) Häufigkeitsverteilung kann dann die betreffende vorgegebene Wahrscheinlichkeitsdichtefunktion gefittet werden, beispielsweise durch Verwenden der Least-Squares-Methode. Üblicherweise wird man hierfür jedoch eine vorteilhaftere statistische Schätzfunktion verwenden, beispielsweise die Maximum-Likelihood-Methode oder die Momenten-Methode.

Als Wahrscheinlichkeitsdichtefunktion, die für die Durchführung des Verfahrens vorgegeben werden muss, sollte ein solcher Typ gewählt werden, von dem anzunehmen ist, dass er, bei durchgeführter Parametrierung, die Stichprobe gut beschreiben kann. Da im vorliegenden Fall Extremwerte für die betreffende Eigenschaft ausgewählt werden und die jeweilige Stichprobe bilden, wird man häufig einen Typ der verallgemeinerten Extremwertverteilung oder die verallgemeinerte Extremwertverteilung (mit ihren drei Parametern) wählen, welche die Gumbel-Verteilung, die Weibull-Verteilung und die Fréchet-Verteilung zusammenfasst. Die häufig verwendete Gumbel-Verteilung besitzt die Form:

$$ f(x) = \exp\left[-\exp\left(-\frac{x-\mu}{\beta}\right)\right] $$

Dabei bezeichnet f den Wert der Wahrscheinlichkeitsdichte als Funktion der Zufallsgröße x. Der Wert x der jeweiligen Zufallsgröße bezeichnet im vorliegenden Fall den Wert der betreffenden Eigenschaft oder den kombinierten Wert. Die Parameter $\mu$ und $\beta$ werden durch das gewählte statistische Verfahren bestimmt.

Fig. 2 zeigt ein Diagramm, welches das Fitten einer Wahrscheinlichkeitsdichtefunktion f(x) an eine relative empirische Häufigkeitsverteilung von maximalen Pixelwerten schematisch darstellt, wobei mit x der Pixelwert bezeichnet ist. Auf der Abszisse sind die Pixelwerte und auf der Ordinate sind die Werte für die Wahrscheinlichkeitsdichte bzw. die relative Häufigkeit aufgetragen.

Mit der so parametrierten Wahrscheinlichkeitsdichtefunktion kann der gewünschte Schwellwert (für die vorgegebene Rate, mit der in zu untersuchenden Bildern fälschlicherweise eine Maximal-Anomalie detektiert wird bzw. mit der in zu untersuchenden Bildern richtigerweise keine Maximal-Anomalie erkannt wird) in einem weiteren Schritt bestimmt werden. Hierzu wird der Schwellwert so festgelegt, dass die Fläche unter der parametrierten Wahrscheinlichkeitsdichtefunktion oberhalb des Schwellwertes gleich der vorgegebenen Rate ist, mit der in zu untersuchenden Bildern fälschlicherweise eine Maximal-Anomalie detektiert wird, bzw. die Fläche unter der parametrierten Wahrscheinlichkeitsdichtefunktion unterhalb des Schwellwertes gleich der vorgegebenen Rate ist, mit der in zu untersuchenden Bildern richtigerweise keine Maximal-Anomalie erkannt wird. Denn diese Fläche entspricht der Wahrscheinlichkeit für das Auftreten eines Maximalwerts der betreffenden Eigenschaft in einem digitalen Bild, der größer oder gleich dem Schwellwert ist. Der Schwellwert kann durch Umstellen der Gleichung aus der Umkehrfunktion der zu der parametrierenden Wahrscheinlichkeitsdichtefunktion gehörenden Verteilungsfunktion erfolgen, falls eine geschlossene Lösung für die Umkehrfunktion existiert. Andernfalls kann die Berechnung des Schwellwertes mittels bekannter und geeigneter numerischer Verfahren erfolgen.

In Fig. 2 sind Schwellwerte $X_{so,1}$, $X_{so,2}$ und $X_{so,3}$ eingezeichnet, die einer Fehlauswurfrate (Falsch-Positiv-Rate) von 1,0 %, 0,6 % und 0,1 % entsprechen, d. h. die Flächen unter der Wahrscheinlichkeitsdichtefunktion rechts von diesen Schwellwerten ergeben die Werte 0,01, 0,006 und 0,001.

Wird anstelle der gewünschten Falsch-Positiv-Rate die Richtig-Negativ-Rate vorgegeben, so muss die Fläche unter der Wahrscheinlichkeitsdichtefunktion unterhalb des oberen Schwellwertes $X_{so}$ in entsprechender Weise für die Berechnung des Maximal-Schwellwertes herangezogen werden.

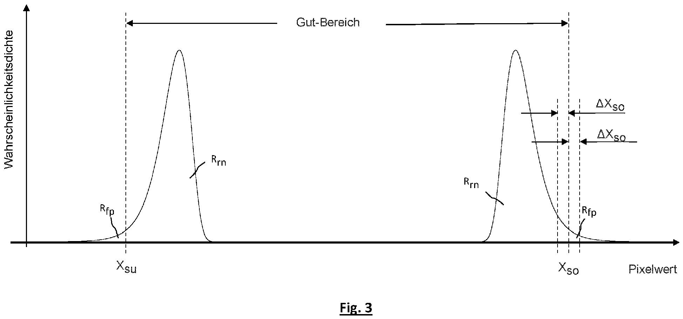

In Fig. 3 ist ein ähnliches Diagramm wie in Fig. 2 dargestellt, wobei jedoch nur der Verlauf der bereits gefitteten Wahrscheinlichkeitsdichtefunktion gezeigt ist. In diesem Beispiel wird sowohl ein Maximal-Schwellwert $X_{so}$ als auch ein Minimal-Schwellwert $X_{su}$ anhand der parametrierten Wahrscheinlichkeitsdichtefunktion bestimmt. Hier wird in beiden Fällen, d.h. sowohl für die Bestimmung des Maximal-Schwellwertes als auch für die Bestimmung des Minimal-Schwellwertes, dieselbe Falsch-Positiv-Rate $R_{fp}$ vorgegeben, wobei für die Bestimmung des Minimal-Schwellwertes $X_{su}$ die Falsch-Positiv-Rate $R_{fp}$ gleich der Fläche unter der Wahrscheinlichkeitsdichtefunktion unterhalb des Minimal-Schwellwertes $X_{su}$ ist. Entsprechend ist die Richtig-Negativ-Rate $R_{rn}$ gleich der Fläche unter der Wahrscheinlichkeitsdichtefunktion oberhalb des Minimal-Schwellwertes $X_{su}$. Denn eine Minimal-Anomalie wird dann detektiert, wenn der Wert der betreffenden Eigenschaft bzw. der kombinierte Wert für mehrere Eigenschaften kleiner ist als der maßgebliche Minimal-Schwellwert $X_{su}$.

Im Fall der parametrierten Wahrscheinlichkeitsdichtefunktionen gemäß Fig. 3 würde ein digitales Bild dann als eine Anomalie enthaltend detektiert werden, wenn sich für wenigstens eine Region ein Wert der betrachteten Eigenschaft oder ein kombinierter Wert für die betreffenden Eigenschaften ergibt, der außerhalb des Gut-Bereichs zwischen dem Minimal-Schwellwert und dem Maximal-Schwellwert liegt (oder mit anderen Worten, wenn der betreffende Wert kleiner oder gleich dem Minimal-Schwellwert $X_{su}$ oder größer oder gleich dem Maximal-Schwellwert $X_{so}$ ist).

Weiterhin ist in Fig. 3 ein Konfidenzintervall für den Maximal-Schwellwert $X_{so}$ eingezeichnet, wobei hier der Einfachheit halber ein symmetrisches Konfidenzintervall mit den Grenzen $X_{so} - \Delta X_{so}$ und $X_{so} + \Delta X_{so}$ angenommen wurde. Um die Fehlauswurfrate mit noch höherer Sicherheit auf den gewünschten vorgegebenen Wert zu reduzieren, kann bei der Detektion von Anomalien ein sekundärer Maximal-Schwellwert verwendet werden, der um $\Delta X_{so}$ größer ist als der ermittelte Schwellwert $X_{so}$. In gleicher Weise kann ein sekundärer Minimal-Schwellwert verwendet werden, der um die Breite eines Konfidenzintervalls $\Delta X_{su}$ für den unteren Schwellwert $X_{su}$ kleiner ist als der ermittelte Schwellwert $X_{su}$. Mit anderen Worten, der sekundäre Maximal-Schwellwert entspricht der oberen Grenze des Konfidenzintervalls für den Maximal-Schwellwert und der sekundäre Minimal-Schwellwert entspricht der unteren Grenze des Konfidenzintervalls für den Minimal-Schwellwert.

Wie vorstehend ausgeführt, kann die Anzahl der digitalen Bilder für das Bestimmen des oder der Schwellwerte (Maximal- oder Minimal-Schwellwert) fest vorgegeben sein. Diese Anzahl müsste jedoch so groß gewählt werden, dass ein ausreichend zuverlässiger Schwellwert ermittelt wird.

Das Verfahren eignet sich zur Detektion von Anomalien in Bildern von Produkten, die auf beliebige Weise erzeugt werden können und die beliebige Eigenschaften der Produkte darstellen. Insbesondere eignet sich das Verfahren zur Analyse der Bilder, die mittels Inspektionsvorrichtungen gewonnen werden, die mit Röntgenstrahlung oder Terahertzstrahlung arbeiten und auf diese Weise Informationen über das Innere eines Produkts erzeugen können. Das Verfahren kann insbesondere per Software in eine Inspektionsvorrichtung implementiert werden. Das Ergebnis des Detektionsverfahrens kann genutzt werden, um weitere Vorrichtungen, beispielsweise eine Sortiervorrichtung, anzusteuern.

Wurde der gewünschte Maximal- oder Minimal-Schwellwert in der vorstehenden Weise bestimmt, so schließt sich das nachstehend beschriebene weitere Verfahren an, welches in einem separaten Prüfprozess durchgeführt wird. Der Prüfprozess kann insbesondere vor der Aufnahme des produktiven Betriebs einer Anlage mit einer Röntgeninspektionsvorrichtung 100 (bzw. einer beliebig ausgestalteten Inspektionsvorrichtung) durchgeführt werden.

Es wird nochmals ausdrücklich darauf hingewiesen, dass die Bestimmung des oder der gewünschten Schwellwerte in der vorstehend beschriebenen Art und Weise für die Durchführung des nachstehend beschriebenen Prüfprozesses keine zwingende Voraussetzung ist. Vielmehr kann der gewünschte Schwellwert auch unmittelbar vorgegeben werden, beispielsweise durch eine Bedienperson oder indem der Schwellwert aus einem Speicher entnommen wird, in welchem der gewünschte Maximal-Schwellwert und/oder Minimal-Schwellwert, einem Produkttyp zugeordnet, gespeichert ist.

Der Prüfprozess umfasst folgende Schritte: Zunächst wird eine Mehrzahl von digitalen Schlechtbildern erzeugt, die jeweils zumindest eine vorbekannte Anomalie aufweisen. Die Erzeugung der digitalen Schlechtbilder kann dabei unter Verwendung von einem oder mehreren physischen Schlechtprodukten erfolgen, welche jeweils einen oder mehrere vorbekannte Störgegenstände beinhalten, die in einem digitalen Bild (Schlechtbild) des betreffenden Schlechtprodukts eine entsprechende vorbekannte Anomalie erzeugen. Derartige Schlechtprodukte werden aus Gutprodukten hergestellt, in welche jeweils ein oder mehrere vorbekannte Störgegenstände, vorzugsweise an einer bestimmten Position innerhalb des Gutprodukts, eingebracht werden. Hierdurch ist es möglich, in einem mittels eines derart erstellten Schlechtprodukts hergestellten Schlechtbild den Maximal-Extremwert bzw. Minimal-Extremwert, welcher durch die betreffende vorbekannte Anomalie erzeugt wird und welcher als Maximal-Stichprobenwert bzw. Minimal-Stichprobenwert zur Bestimmung der Detektionsrate unter Verwendung des nachstehend erläuterten Verfahrens verwendet wird, nur in einem in geeigneter Weise festgelegten Bereich des digitalen Bildes zu suchen, welcher die vorbekannte Anomalie umfasst bzw. in welchem der betreffende Störgegenstand liegt (unabhängig davon, ob der Störgegenstand in dem digitalen Schlechtbild eine detektierbare Anomalie erzeugt).

Das Festlegen des zu berücksichtigenden Bereichs des digitalen Bildes kann in vielfältiger Weise erfolgen. Beispielsweise kann die geometrische Form des Bereichs (quadratisch, kreisförmig oder dergleichen) festgelegt und die Größe dann so gewählt werden, dass sich der Störgegenstand bzw. die durch diesen hervorgerufene Anomalie vollständig innerhalb des Bereichs befindet.

Nach einer anderen Variante kann ein Basis-Schwellwert verwendet werden, wobei (in der bereits vorstehend erläuterten Weise) alle Regionen des Schlechtbildes ermittelt werden, deren Pixelwerte zur Bestimmung einer Maximal-Anomalie größer (oder größer oder gleich) sind bzw. zur Bestimmung einer Minimal-Anomalie kleiner sind (oder kleiner oder gleich) als der betreffende Basis-Schwellwert. Von diesen Regionen kann dann diejenige Region verwendet werden, welche den Störgegenstand bzw. die durch diesen hervorgerufene vorbekannte Anomalie umfasst. Dabei kann unter Verwendung der Information über die Position innerhalb des Schlechtprodukts bzw. innerhalb des betreffenden Schlechtbildes und der Information über die Geometrie des betreffenden Störgegenstands zusätzlich geprüft werden, ob der Störgegenstand bzw. die vorbekannte Anomalie mit einem ausreichenden Teil von der so bestimmten Region umfasst ist. Dieses Erfordernis kann beispielsweise dann bejaht werden, wenn sich die geometrische Fläche des Störgegenstands innerhalb des Schlechtbildes bzw. die Fläche der hierdurch hervorgerufenen vorbekannten Anomalie ausreichend überlappen, beispielsweise mit einem Überlappungsgrad von mehr als 50 oder mehr als 80 %. Als Überlappungsgrad kann dabei das Verhältnis aus der Fläche des Störgegenstands oder der hierdurch hervorgerufenen vorbekannten Anomalie in dem digitalen Schlechtbild und der Fläche der betreffenden zuvor bestimmten Region verwendet werden.

Das Erzeugen von Schlechtbildern kann jedoch auch unter Verwendung wenigstens eines zuvor erzeugten Gutbildes erfolgen, d.h. unter Verwendung wenigstens eines digitalen Bildes eines Gutprodukts, das vorzugsweise demselben Typ von Produkten entspricht, die in einem produktiven Betrieb der jeweiligen Inspektionsvorrichtung 100 inspiziert werden sollen. In der Praxis wird man anstelle eines einzigen Gutbildes vorzugsweise eine Mehrzahl von Gutbildern verwenden, um Informationen über die statistische Verteilung der Eigenschaften der Gutbilder zu berücksichtigen. Derartige Gutbilder können bereits während des vorstehend erläuterten Einlernprozesses (in welchem ein Schwellwert unter Vorgabe der Fehlauswurfrate bestimmt wird) erzeugt und für die Erstellung von "künstlichen" Schlechtbildern verwendet werden. Hierzu können selbstverständlich ein oder mehrere Gutbilder in einem Speicher abgelegt werden.

Zur Erzeugung eines derartigen "künstlichen" Schlechtbildes kann zunächst ein virtueller Störgegenstand definiert werden, wobei ein vorbestimmtes Material und die Geometrie des virtuellen Störgegenstands festgelegt werden. Als Geometrie können insbesondere einfache Formen verwendet werden, beispielsweise die Form einer Kugel, eines Würfels oder eines Quaders. Das Material des Störgegenstands kann dadurch berücksichtigt werden, dass, insbesondere bei Inspektionsverfahren, bei denen eine Durchstrahlung des betreffenden Produkts erfolgt, die spezifische Dämpfung des Materials berücksichtigt wird. Für die Röntgeninspektion können hierzu Datenbanken bzw. Tabellen verwendet werden, in denen die spezifische Dämpfung einer Vielzahl von Materialien enthalten ist. Unter einer spezifischen Dämpfung wird dabei die Dämpfung verstanden, welche die betreffende Strahlung beim Durchstrahlen des Materials pro Längeneinheit (in Durchstrahlungsrichtung gesehen) erfährt. Diese Zusatzdämpfung kann somit auf einfache Weise in die bereits vorhandenen Bilddaten des Gutbildes, welches zur Erstellung des "künstlichen" Schlechtbildes verwendet wird, an der betreffenden Position eingerechnet werden. Liegen die Bilddaten des Gutbildes in einem logarithmischen Maßstab vor, so kann das Einrechnen der Zusatzdämpfung, welche ebenfalls in einem logarithmischen Maßstab vorliegt, durch Addition erfolgen.

Unabhängig davon, ob physische oder virtuelle Störgegenstände zur Erzeugung von digitalen Schlechtbildern verwendet werden, muss, ausgenommen den Fall von kugelförmigen Störgegenständen, auch festgelegt werden, in welcher Stellung sich der Störgegenstand relativ zur Richtung der Durchstrahlung des zu inspizierenden Produkts (oder allgemeiner: relativ zur Beobachtungsrichtung des Produkts) befindet. Für das Einrechnen der Zusatzdämpfung, welche durch den jeweiligen Störgegenstand erzeugt wird, wird der Störgegenstand (genauer: dessen Projektion in einer Ebene senkrecht zur Durchstrahlungsrichtung) in Pixel aufgeteilt (wobei die Pixelaufteilung vorzugsweise der bereits vorhandenen Pixelaufteilung des Gutbildes entspricht). Auf diese Weise kann das Einrechnen der Zusatzdämpfung für jedes einzelne Pixel (d.h. pixelweise) vorgenommen werden. Das so erzeugte "künstliche" Schlechtbild kann dann in gleicher Art und Weise verarbeitet werden, wie ein Schlechtbild, welches mittels eines physischen Störgegenstandes erzeugt wurde.

Wie bereits vorstehend angedeutet, wird für eine ausreichende Anzahl von so erzeugten Schlechtbildern für jede vorgegebene Anomalie, die in einem Schlechtbild enthalten ist, ein entsprechender Maximal-Stichprobenwert bzw. Minimal-Stichprobenwert (abhängig davon, ob es sich um eine Maximal- oder Minimal-Anomalie handelt) bestimmt. Dies kann in gleicher Weise erfolgen, wie dies zuvor bei der Bestimmung eines Maximal-Schwellwertes bzw. Minimal-Schwellwertes erläutert wurde.

Aus einer so erzeugten Maximalwert-Stichprobe bzw. Minimalwert-Stichprobe kann dann eine Detektionsrate bestimmt werden. Hierzu kann nach einer ersten Variante eine Wahrscheinlichkeitsdichtefunktion vorgegeben werden, welche zumindest einen freien, nicht vorgegebenen Parameter aufweist. Dieser Parameter kann dann in geeigneter Weise so bestimmt werden, insbesondere unter Verwendung eines statistischen Schätzverfahrens, dass die parametrierte Wahrscheinlichkeitsdichtefunktion die jeweilige Stichprobe optimal beschreibt. Diese Parametrierung kann in gleicher Weise erfolgen, wie dies zuvor im Zusammenhang mit der Bestimmung eines Maximal-Schwellwertes bzw. Minimal-Schwellwertes beschrieben wurde.

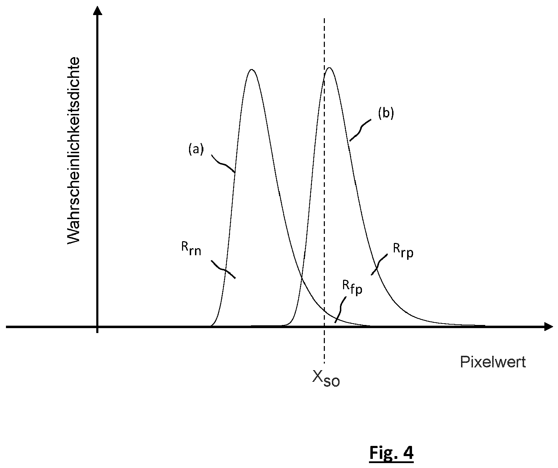

Fig. 4 zeigt ein Diagramm mit zwei Kurven, welche Wahrscheinlichkeitsdichtefunktionen darstellen, die unter Verwendung einer verallgemeinerten Extremwert-Funktion wie oben beschrieben parametriert wurden. Die Kurve (a) zeigt eine Wahrscheinlichkeitsdichtefunktion, die zur Bestimmung eines Maximal-Schwellwertes unter Verwendung von Gutprodukten (bzw. Gut-Prozessprodukten) in der oben beschriebenen Art und Weise gewählt und parametriert wurde. Aus dieser Kurve wird unter Vorgabe eines Wertes für die Fehlauswurfrate bzw. Falsch-Positiv-Rate $R_{fp}$ der entsprechende Schwellwert $X_{so}$ bestimmt.

Der so bestimmte Schwellwert $X_{so}$ kann dann verwendet werden, um aus der zweiten Kurve (b) einen Schätzwert für die Detektionsrate zu ermitteln, die sich bei einem produktiven Betrieb der Inspektionsvorrichtung 100 bei der Inspektion von gleichartigen Produkten einstellen wird. Wie bereits vorstehend erwähnt, ist dieser Schätzwert umso zutreffender, je besser die in der Praxis auftretenden Störgegenstände mit den vorbekannten Störgegenständen übereinstimmen, die zur Bestimmung der betreffenden Maximalwert-Stichprobe bzw. Minimalwert-Stichprobe verwendet wurden.

Die Kurve (b) in Fig. 4 zeigt eine Wahrscheinlichkeitsdichtefunktion, die für eine Maximalwert-Stichprobe für eine vorbekannte Anomalie in der vorstehend beschriebenen Art und Weise gewählt und parametriert wurde. Demzufolge kann aus dieser Wahrscheinlichkeitsdichtefunktion eine Detektionsrate für die betreffende vorbekannte Anomalie, die bei der Inspektion von Produkten desselben Typs auftreten wird, ermittelt werden. Hierzu muss lediglich die Wahrscheinlichkeitsdichtefunktion von dem zuvor bestimmten Maximal-Schwellwert $X_{so}$ bis unendlich (oder einem sehr hohen Wert, beispielsweise dem von dem Strahlungsdetektor gelieferten maximal möglichen Pixelwert) integriert werden.

Dieser Integralwert entspricht der Richtig-Positiv-Rate für eine Detektion der betreffenden vorbekannten Anomalie, also der Detektionsrate.

Diese nunmehr bekannte Detektionsrate kann von einer Bedienperson oder auch automatisch dahingehend bewertet werden, ob der betreffende Wert in der Praxis akzeptabel ist, insbesondere unter Berücksichtigung der Folgen, die sich im Fall einer Nicht-Detektion eines Störgegenstands einstellen. Wird beispielsweise ein Lebensmittelprodukt wie Joghurt, Käse, Schokolade, Kekse oder dergleichen inspiziert, und befindet sich darin ein Metall- oder Knochensplitter, der nicht detektiert wird, so kann dies beim Endverbraucher, welcher ein derart verunreinigtes Lebensmittel konsumiert, zu möglicherweise lebensgefährlichen Verletzungen führen. In einem solchen Fall muss die Detektionsrate entsprechend strengen Vorgaben genügen, beispielsweise größer als 99 % sein. In anderen Fällen, in denen eine Nicht-Detektion zu weniger gravierenden Folgen führt, kann die Detektionsrate auf einen deutlich geringeren Wert von 80 % oder 90 % eingestellt werden.

Da die Detektionsrate und die Fehlauswurfrate bzw. der vorgegebene Maximal-Schwellwert bzw. Minimal-Schwellwert voneinander abhängen, wird es in vielen Fällen nicht möglich sein, gleichzeitig eine gewünscht niedrige Fehlauswurfrate und eine ebenfalls gewünscht hohe Detektionsrate zu erreichen. Ein derartiger Fall ist in Fig. 4 dargestellt. Wie aus diesem Diagramm ersichtlich, führt ein hoher Maximal-Schwellwert $X_{so}$ bzw. eine geringe Fehlauswurfrate $R_{fp}$ zwangsläufig zu einer drastisch verringerten Detektionsrate $R_{rp.}$.

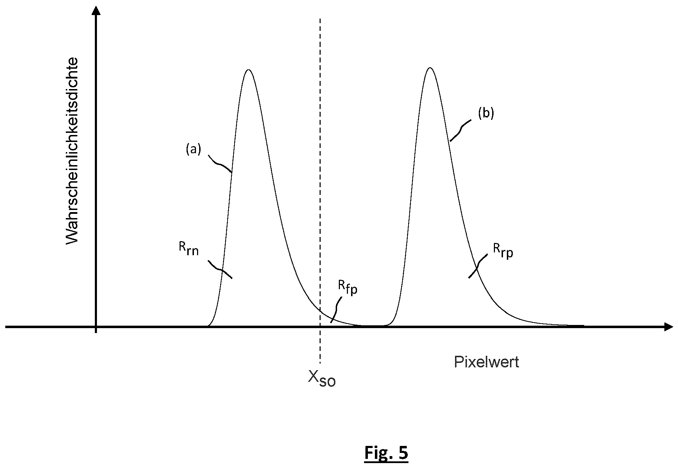

Fig. 5 zeigt dagegen einen anderen Fall, in dem die vorbekannte Maximal-Anomalie deutlich besser in einem Schlechtbild hervortritt. Hier ist die Kurve (b) gegenüber der Kurve (b) in Fig. 4 deutlich weiter nach rechts, d. h. in Richtung größerer Pixelwerte, versetzt. Demzufolge führt derselbe Maximal-Schwellwert $X_{so}$ bzw. dieselbe Fehlauswurfrate $R_{fp}$ wie in Fig. 4 in dem Fall gemäß Fig. 5 zu einer extrem hohen Detektionsrate $R_{fp}$.

Die beiden Fälle gemäß den Figuren 4 und 5 können sich beispielsweise für vorbekannte Anomalien ergeben, die durch Störgegenstände derselben Größe, jedoch aus unterschiedlichen Materialien verursacht werden. In gleicher Weise können sich diese Fälle ergeben, wenn die Störgegenstände aus demselben Material bestehen, jedoch der Störgegenstand im Fall der Fig. 4 deutlich kleiner ist als der Störgegenstand im Fall der

Fig. 5.

Anstelle der Verwendung einer Wahrscheinlichkeitsdichtefunktion zur Beschreibung der Maximalwert-Stichprobe bzw. Minimalwert-Stichprobe zur Bestimmung der Detektionsrate können auch die jeweiligen Stichprobenwerte als solche verwendet werden. Die Detektionsrate kann in diesem Fall dadurch bestimmt werden, dass die Anzahl derjenigen Stichprobenwerte bestimmt wird, die größer oder gleich dem zuvor bestimmten Schwellwert sind. Die Detektionsrate ergibt sich dann durch Division der so bestimmten Anzahl der Stichprobenwerte durch die Gesamtanzahl der Stichprobenwerte.

Auch in diesem Fall ist es nicht erforderlich, den betreffenden Schwellwert aus einer zuvor vorgegebenen Fehlauswurfrate zu bestimmen. Vielmehr ist es ebenfalls möglich, den Schwellwert unmittelbar vorzugeben.

In Fig. 6 ist eine Anzeige der Anzeigeeinheit 124 der Röntgeninspektionsvorrichtung 100 dargestellt, welche das Ergebnis eines Prüfprozesses zeigt, der wie vorstehend erläutert durchgeführt wurde.

Wie aus dieser Figur ersichtlich, wurde für drei unterschiedliche Materialien, nämlich Aluminium, Keramik und Glas, jeweils die Detektionsrate für kugelförmige Störgegenstände mit unterschiedlichen Durchmessern bestimmt, nämlich 0,5 mm, 1,0 mm, 1,5 mm, 2,0 mm, 2,5 mm und 3,0 mm. Die Zahlenwerte für die Detektionsrate sind einer entsprechenden schematischen Darstellung des jeweiligen Störgegenstands zugeordnet dargestellt. Diese Anzeige gibt einer Bedienperson unmittelbar Aufschluss über die Detektionsrate für die verschiedenen Materialien und Größen der Störgegenstände. Wie aus Fig. 6 ersichtlich, werden beispielsweise kugelförmige Störgegenstände aus Aluminium mit einem Durchmesser von 0,5 mm noch mit einer Detektionsrate von 13 % erkannt, während entsprechend große Störgegenstände aus Keramik und Glas nicht mehr erkannt werden. Störgegenstände aus Aluminium oder Keramik mit 2,5 bzw. 3,0 mm Durchmesser werden noch zu jeweils 100 % erkannt, während entsprechende Störgegenstände aus Glas nur mit einer Detektionsrate von 76 % bzw. 93 % detektiert werden.

Fig. 7 zeigt eine weitere Variante einer Anzeige, die weitestgehend mit der Darstellung in Fig. 6 übereinstimmt. Anstelle von Zahlenwerten für die Detektionsrate wird hier jedoch ein Klassifikator verwendet, wobei eine Detektionsrate kleiner als 80 % als unzureichend, eine Detektionsrate zwischen 80 % und 90 % (die Grenzen eingeschlossen) als noch akzeptabel und eine Detektionsrate >90 % als gut klassifiziert wird. Die drei verschiedenen Klassifikatorwerte werden mittels Smileys dargestellt. In gleicher Weise könnte auch ein Farbcode verwendet werden, beispielsweise grün für "gut", gelb für "akzeptabel" und rot für "unzureichend". Ein derartiger Klassifikator ermöglicht einer Bedienperson eine noch raschere Interpretation der Anzeige bzw. des Ergebnisses des Prüfprozesses.

Fig. 8 zeigt eine weitere Variante einer Anzeige der Anzeigeeinheit 124, wobei hier die Größe von kugelförmigen Störgegenständen aus unterschiedlichen Materialien angezeigt wird, für welche sich noch eine als gut klassifizierte Detektionsrate ergibt. In dem dargestellten Fall ergibt sich für kugelförmige Störgegenstände aus Aluminium noch eine gute Detektierbarkeit für Kugeldurchmesser von größer oder gleich 2,5 mm, für Keramik größer oder gleich 2,0 mm und für Glas größer oder gleich 3,0 mm, wobei hier ebenfalls eine Stufung in Schritten von 0,5 mm für die Größe der Störgegenstände aus ein und demselben Material bei der Durchführung des Prüfprozesses angenommen wurde.

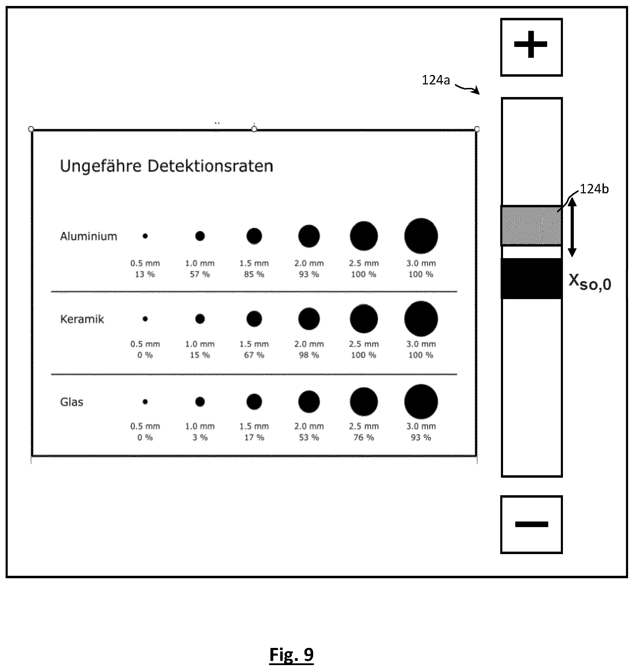

Fig. 9 zeigt eine weitere Variante einer Anzeige der Anzeigeeinheit 124, welche weitgehend der Anzeige gemäß Fig. 6 entspricht. Zusätzlich ist hier ein Einstellmittel für den Schwellwert $X_{so}$ vorgegeben. Das Einstellmittel ist in dem dargestellten Ausführungsbeispiel als Schieber 124a ausgebildet, wobei dieser auf einfache Weise unter Verwendung eines Touch-Displays für die Anzeigeeinheit 124 realisiert werden kann.

In einem Ausgangszustand kann sich ein Schiebeelement 124b des Schiebers 124a in einer Ausgangsstellung befinden, in welcher ein Ausgangs-Schwellwert $X_{so,0}$ voreingestellt ist. In diesem Ausgangszustand kann die Detektionsrate für jede Größe und jedes Material der Störgegenstände ermittelt und angezeigt werden. Stellt eine Bedienperson fest, dass die Detektionsrate für bestimmte Größen und/oder bestimmte Materialien zu gering ist, kann die Bedienperson den Schieber in Richtung größerer Werte für den Schwellwert verschieben. Dabei können neue Detektionsraten unmittelbar nach dem Ändern der Position des Schiebeelements 124b berechnet und angezeigt werden. Auf diese Weise kann die Bedienperson einfach und schnell den Schwellwert so verändern, dass die Detektionsrate für den jeweiligen Fall optimal ist.

Selbstverständlich kann anstelle des Schwellwerts auch eine Fehlauswurfrate mittels des Einstellmittels eingestellt bzw. verändert werden. In diesem Fall erhält die Bedienperson unmittelbar eine Information über die gegebenenfalls bestehende starke Abhängigkeit zwischen der Fehlauswurfrate und der Detektionsrate und kann die Fehlauswurfrate beispielsweise so einstellen, dass sich (noch) eine zufriedenstellende Detektionsrate ergibt.

Bezugzeichenliste

| | |
|---|---|
| 100 | Röntgeninspektionsvorrichtung |
| 102 | Vorrichtung zur Detektion von Anomalien |
| 104 | Produkt |
| 106 | Fördereinrichtung |
| 108 | Transportband |
| 110 | Transportband |
| 112 | Transportband |
| 114 | Transportband |
| 116 | Abschirmgehäuse |
| 118 | Röntgenstrahlungsquelle |
| 120 | Röntgenstrahlungsdetektor |
| 121 | Röntgenstrahl |
| 122 | Bildverarbeitungseinheit |
| 124 | Anzeigeeinheit |
| 124a | Schieber |
| 124b | Schiebeelement |

F       Förderrichtung

$X_{su}$    unterer Schwellwert (Bestimmung des Schwellwertes mittels Gutprodukten bzw. Gut-Prozessprodukten)

$Y_{su}$    unterer Schwellwert (Bestimmung des Schwellwertes mittels Schlechtprodukten bzw. Schlecht-Prozessprodukten)

$X_{so}$    oberer Schwellwert (Bestimmung des Schwellwertes mittels Gutprodukten bzw. Gut-Prozessprodukten)

$Y_{so}$    oberer Schwellwert (Bestimmung des Schwellwertes mittels Schlechtprodukten bzw. Schlecht-Prozessprodukten)

$\Delta X_{so}$   Breite des Konfidenzintervalls für den Maximal-Schwellwert

$\Delta X_{su}$   Breite des Konfidenzintervalls für den Minimal-Schwellwert

$R_{fp}$    Falsch-Positiv-Rate

$R_{rn}$    Richtig-Negativ-Rate

$R_{rp}$    Richtig-Positiv-Rate

$R_{fn}$    Falsch-Negativ-Rate


**Patentansprüche**

**1.** Verfahren zur Detektion von Anomalien in digitalen Bildern von Produkten, wobei jedes digitale Bild durch eine Vielzahl von Pixeln gebildet ist, die durch Bilddaten repräsentiert sind, und wobei jedes Pixel einen zugeordneten Ort innerhalb des betreffenden Bildes repräsentiert und einen den betreffenden Ort charakterisierenden Wert aufweist,

(a) wobei jedes zu untersuchende Bild als eine Region aufgefasst oder in zwei oder mehrere Regionen unterteilt wird, welche jeweils aus einem oder mehreren benachbarten Pixeln bestehen,
(b) und wobei für jede Region ein Wert für wenigstens eine Eigenschaft oder ein kombinierter Wert für mehrere Eigenschaften der Region bestimmt wird,
(c) wobei eine Region als Maximal-Anomalie detektiert wird, wenn der Wert der mindestens einen Eigenschaft oder ein kombinierter Wert für mehrere Eigenschaften der Region größer ist als ein vorgegebener Maximal-Schwellwert, oder wobei eine Region als Minimal-Anomalie detektiert wird, wenn der Wert der mindestens einen Eigenschaft oder ein kombinierter Wert für mehrere Eigenschaften der Region kleiner ist als ein vorgegebener Minimal-Schwellwert, **dadurch gekennzeichnet,**
(d) **dass** in einem Prüfprozess folgende Schritte ausgeführt werden:

(i) Erzeugen einer Mehrzahl von digitalen Schlechtbildern von realen oder fiktiven Schlechtprodukten, die jeweils wenigstens eine vorbekannte Anomalie aufweisen;
(ii) für jedes Schlechtbild, Festlegen der Region oder der Regionen und Bestimmen des Wertes der mindestens einen Eigenschaft oder des kombinierten Wertes für mehrere Eigenschaften jeder Region und Bestimmen des maximalen Wertes dieser Werte als Maximal-Stichprobenwert einer Maximalwert-Stichprobe oder Bestimmen des minimalen Wertes dieser Werte als Minimal-Stichprobenwert einer Minimalwert-Stichprobe;
(iii) Bestimmen einer Detektionsrate für die wenigstens eine vorbekannte Anomalie

(1) durch Bestimmen von Schätzwerten für alle freien, nicht vorgegebenen Parameter einer zur Beschreibung der Maximalwert-Stichprobe oder der Minimalwert-Stichprobe vorgegebenen Wahrscheinlichkeitsdichtefunktion (Parametrieren) unter Verwendung der Maximal-Stichprobenwerte oder der Minimal-Stichprobenwerte und unter Verwendung eines statistischen Schätzverfahrens, und
(2) durch Integration der parametrierten Wahrscheinlichkeitsdichtefunktion unter Verwendung des vorgegebenen Maximal-Schwellwertes oder Minimal-Schwellwertes als Integrationsgrenze, oder

(iv) Bestimmen einer Detektionsrate für die wenigstens eine vorbekannte Anomalie als Verhältnis der Anzahl der Werte der Maximalwert-Stichprobe oder der Minimalwert-Stichprobe, welche größer oder gleich dem vorgegebenen Maximal-Schwellwert oder kleiner oder gleich dem vorgegebenen Minimal-Schwellwert sind, und der Gesamtanzahl der Werte der Maximalwert-Stichprobe oder der Minimalwert-Stichprobe; und
(v) Zuordnen der Detektionsrate zu der wenigstens einen vorbekannten Anomalie.

**2.** Verfahren nach Anspruch 1, **dadurch gekennzeichnet, dass** der Maximal-Schwellwert und/oder der Minimal-Schwellwert in einem Einlernprozess bestimmt werden, in dem folgende Schritte ausgeführt werden:

(a) Erzeugen oder Verwenden einer Anzahl von digitalen Bildern von Gutprodukten, welche keine Anomalie enthalten, oder von Gut-Prozessprodukten, welche überwiegend keine Anomalie enthalten, wobei die Anzahl der Bilder vorgegeben ist oder im Verlauf des Einlernprozesses bestimmt wird;

(b) für jedes der digitalen Bilder, Festlegen der Region oder der Regionen und Bestimmen des Wertes der mindestens einen Eigenschaft oder des kombinierten Wertes für mehrere Eigenschaften jeder Region und Bestimmen des maximalen Wertes dieser Werte als Maximal-Stichprobenwert einer Maximalwert-Stichprobe und/oder Bestimmen des minimalen Wertes dieser Werte als Minimal-Stichprobenwert einer Minimalwert-Stichprobe;

(c) unter Verwendung eines statistischen Schätzverfahrens, Bestimmen von Schätzwerten für alle freien, nicht vorgegebenen Parameter einer zur Beschreibung der Maximalwert-Stichprobe vorgegebenen Wahrscheinlichkeitsdichtefunktion unter Verwendung der Maximal-Stichprobenwerte und/oder Bestimmen von Schätzwerten für alle freien, nicht vorgegebenen Parameter einer zur Beschreibung der Minimalwert-Stichprobe vorgegebenen Wahrscheinlichkeitsdichtefunktion unter Verwendung der Minimal-Stichprobenwerte;

(d) Vorgeben einer ersten Rate, mit der in zu untersuchenden Bildern fälschlicherweise eine Maximal-Anomalie detektiert wird, oder einer zweiten Rate, mit der in zu untersuchenden Bildern richtigerweise keine Maximal-Anomalie erkannt wird, und/oder Vorgeben einer dritten Rate, mit der in zu untersuchenden Bildern fälschlicherweise eine Minimal-Anomalie detektiert wird, oder einer vierten Rate, mit der in zu untersuchenden Bildern richtigerweise keine Minimal-Anomalie erkannt wird,

(e) Bestimmen des Maximal-Schwellwertes unter Verwendung der gemäß Merkmal (c) parametrierten Wahrscheinlichkeitsdichtefunktion oder einer ihr entsprechenden Verteilungsfunktion so, dass die Wahrscheinlichkeit für das Auftreten eines maximalen Wertes, der größer oder gleich dem Maximal-Schwellwert ist, der vorgegebenen ersten Rate entspricht oder dass die Wahrscheinlichkeit für das Auftreten eines maximalen Wertes, der kleiner oder gleich dem Maximal-Schwellwert ist, der vorgegebenen zweiten Rate entspricht, und/oder

(f) Bestimmen des Minimal-Schwellwertes unter Verwendung der gemäß Merkmal (c) parametrierten Wahrscheinlichkeitsdichtefunktion oder einer dieser entsprechenden Verteilungsfunktion so, dass die Wahrscheinlichkeit für das Auftreten eines minimalen Wertes, der kleiner oder gleich dem Minimal-Schwellwert ist, der vorgegebenen dritten Rate entspricht oder dass die Wahrscheinlichkeit für das Auftreten eines minimalen Wertes, der größer oder gleich dem Minimal-Schwellwert ist, der vorgegebenen vierten Rate entspricht.

3. Verfahren nach Anspruch 1 oder 2, **dadurch gekennzeichnet,**

(a) **dass** das Festlegen der Region oder der Regionen unter Verwendung eines Basis-Schwellwertes erfolgt, wobei jedes isolierte Pixel und jede Gruppe von benachbarten Pixeln, deren Pixelwert jeweils größer ist als der Basis-Schwellwert, jeweils einer Region einer ersten Gruppe von Regionen zugeordnet werden, und/oder wobei jedes isolierte Pixel und jede Gruppe von benachbarten Pixeln, deren Pixelwert jeweils kleiner oder gleich dem Basis-Schwellwert ist, jeweils einer Region einer zweiten Gruppe von Regionen zugeordnet werden, oder

(b) **dass** das Festlegen der Region oder der Regionen unter Verwendung einer geometrischen Maske erfolgt, insbesondere einer fix vorgegebenen Maske oder einer mittels Bildverarbeitung aus dem jeweiligen Bild erzeugten Maske.

4. Verfahren nach einem der vorhergehenden Ansprüche, **dadurch gekennzeichnet, dass** als Eigenschaft einer Region eine geometrische Eigenschaft verwendet wird, die aus der Ortsinformation der Pixel der Region ermittelt wird, insbesondere die Fläche, der Umfang oder der Durchmesser, oder dass als Eigenschaft einer Region eine Pixelwert-Eigenschaft verwendet wird, die aus den Werten der Pixel der Region ermittelt wird, insbesondere der Maximalwert oder der Minimalwert aller Pixel der Region, der Mittelwert, die Varianz oder Standardabweichung.

5. Verfahren nach einem der vorhergehenden Ansprüche, **dadurch gekennzeichnet, dass** die vorgegebene Wahrscheinlichkeitsverteilung die verallgemeinerte Extremwertverteilung, insbesondere deren Spezialfälle, die Gumbel-Verteilung, die Weibull-Verteilung oder die Fréchet-Verteilung, ist.

6. Verfahren nach einem der vorhergehenden Ansprüche, **dadurch gekennzeichnet, dass** sich die wenigstens eine vorgegebene Anomalie an einer vorgegebenen Position in dem Schlechtbild befindet und dass diese Information und optional auch die Geometrie eines diese vorgegebene Anomalie verursachenden Störgegenstandes zur Bestimmung des diese vorgegebene Anomalie repräsentierenden Maximal-Stichprobenwertes oder Minimal-Stichprobenwertes verwendet wird.

7. Verfahren nach einem der vorhergehenden Ansprüche, **dadurch gekennzeichnet,**

(a) **dass** zur Erzeugung eines Schlechtbildes ein Gutprodukt verwendet wird, welches keine Anomalie enthält, wobei an oder in dem Gutprodukt wenigstens ein Störgegenstand oder ein Träger mit wenigstens einem darauf angeordneten Störgegenstand vorgesehen ist, welcher in dem Schlechtbild die wenigstens eine vorgegebene Anomalie erzeugt, oder
(b) **dass** zur Erzeugung eines Schlechtbildes digitale Bilddaten eines Gutproduktes verwendet werden, wobei die digitalen Bilddaten des Gutproduktes unter Verwendung von bekannten Material- und Geometrieeigenschaften wenigstens eines vorgegebenen Störgegenstandes zur Einrechnung des wenigstens einen Störgegenstandes digital transformiert werden.

8. Verfahren nach Anspruch 7, **dadurch gekennzeichnet, dass** der Träger für den wenigstens einen Störgegenstand plattenförmig oder kartenförmig ausgebildet ist und dass in oder auf dem Träger mehrere Störgegenstände mit identischen Materialeigenschaften, insbesondere aus einem einzigen Material, mit gleichartiger Geometrie, jedoch unterschiedlicher Größe angeordnet sind.

9. Verfahren nach Anspruch 7 oder 8, **dadurch gekennzeichnet, dass** der wenigstens eine Störgegenstand eine Kugel aus einem vorbestimmten Material ist.

10. Verfahren nach einem der vorhergehenden Ansprüche, **dadurch gekennzeichnet, dass** die Detektionsrate als Zahlenwert oder eine damit zusammenhängende Größe oder Kennzeichnung auf einer Anzeigevorrichtung ausgegeben wird.

11. Verfahren nach Anspruch 10, **dadurch gekennzeichnet, dass** die Detektionsrate einer grafischen Darstellung des wenigstens einen Störgegenstandes zugeordnet dargestellt ist und/oder dem zugehörigen Schlechtbild.

12. Verfahren nach Anspruch 10, **dadurch gekennzeichnet, dass** der Maximal-Schwellwert oder Minimal-Schwellwert oder die erste, zweite, dritte oder vierte Rate mittels eines Eingabemittels oder Einstellmittels, beispielsweise eines Schiebers oder Drehknopfes, veränderbar ist und dass auf der Anzeigevorrichtung zu jedem aktuellen Wert für den Maximal-Schwellwert oder Minimal-Schwellwert oder die erste, zweite, dritte oder vierte Rate ein aktueller Wert für die Detektionsrate dargestellt wird.

13. Verfahren nach Anspruch 11, **dadurch gekennzeichnet, dass** die Detektionsrate mittels eines Klassifikators bewertet wird, beispielsweise mit einem Farbcode.

14. Vorrichtung zur Detektion von Anomalien in digitalen Bildern von Produkten, insbesondere Röntgeninspektionsvorrichtung, mit einer Datenverarbeitungseinrichtung, welche dazu ausgebildet ist, digitale Bilddaten von digitalen Bildern von Produkten zu erhalten und zu verarbeiten, **dadurch gekennzeichnet, dass** die Datenverarbeitungseinrichtung dazu ausgebildet ist, das Verfahren nach einem der vorhergehenden Ansprüche auszuführen.

15. Computerprogrammprodukt zur Detektion von Anomalien in digitalen Bildern von Produkten, insbesondere für eine Röntgeninspektionsvorrichtung, welches Befehle umfasst, die bei der Ausführung der Befehle durch eine Datenverarbeitungseinrichtung diese veranlassen, das Verfahren nach einem der Ansprüche auszuführen.

**Fig. 1**

**Fig. 2**

**Fig. 3**

**Fig. 4**

**Fig. 5**

## Ungefähre Detektionsraten

| Aluminium | | | | | | |
|---|---|---|---|---|---|---|
| | 0.5 mm | 1.0 mm | 1.5 mm | 2.0 mm | 2.5 mm | 3.0 mm |
| | 13 % | 57 % | 85 % | 93 % | 100 % | 100 % |

| Keramik | | | | | | |
|---|---|---|---|---|---|---|
| | 0.5 mm | 1.0 mm | 1.5 mm | 2.0 mm | 2.5 mm | 3.0 mm |
| | 0 % | 15 % | 67 % | 98 % | 100 % | 100 % |

| Glas | | | | | | |
|---|---|---|---|---|---|---|
| | 0.5 mm | 1.0 mm | 1.5 mm | 2.0 mm | 2.5 mm | 3.0 mm |
| | 0 % | 3 % | 17 % | 53 % | 76 % | 93 % |

**Fig. 6**

## Ungefähre Detektionsperformance

| Aluminium | | | | | | |
|---|---|---|---|---|---|---|
| | 0.5 mm | 1.0 mm | 1.5 mm | 2.0 mm | 2.5 mm | 3.0 mm |

| Keramik | | | | | | |
|---|---|---|---|---|---|---|
| | 0.5 mm | 1.0 mm | 1.5 mm | 2.0 mm | 2.5 mm | 3.0 mm |

| Glas | | | | | | |
|---|---|---|---|---|---|---|
| | 0.5 mm | 1.0 mm | 1.5 mm | 2.0 mm | 2.5 mm | 3.0 mm |

**Fig. 7**

## Detektierbare Kugelgrößen (>95 %)

| Aluminium | 2.5 mm |
|---|---|
| Keramik | 2.0 mm |
| Glas | 3.0 mm |

**Fig. 8**

**Fig. 9**

**EP 4 459 546 A1**

Europäisches Patentamt
European Patent Office
Office européen des brevets

# EUROPÄISCHER RECHERCHENBERICHT

Nummer der Anmeldung

EP 24 16 9881

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2007/098245 A1 (MYLARASWAMY DINKAR [US] ET AL) 3. Mai 2007 (2007-05-03) | 1-7, 10-15 | INV. G06T7/00 |
| A | * Zusammenfassung * * Absatz [0038] - Absatz [0044]; Abbildungen 1, 3 * | 8,9 | |
| | ----- | | |
| Y | BENSTOCK DANIEL ET AL: "Extreme value analysis (EVA) of inspection data and its uncertainties", NDT&E INTERNATIONAL, Bd. 87, 1. April 2017 (2017-04-01), Seiten 68-77, XP093206233, AMSTERDAM, NL ISSN: 0963-8695, DOI: 10.1016/j.ndteint.2017.01.008 Gefunden im Internet: URL:https://www.sciencedirect.com/science/article/pii/S0963869517300488/pdfft?md5=9b24e5978d4801d3f859ad8bce840e97&pid=1-s2.0-S0963869517300488-main.pdf> | 1-7, 10-15 | |
| A | * Kapitel 1, Absatz 2 * * Kapitel 2.2; Abbildungen 4-5 * | 8,9 | **RECHERCHIERTE SACHGEBIETE (IPC)** G06T |
| | ----- | | |
| T | MULLANY B ET AL: "The implication and evaluation of geometrical imperfections on manufactured surfaces", CIRP ANNALS, ELSEVIER BV, NL, CH, FR, Bd. 71, Nr. 2, 1. Januar 2022 (2022-01-01), Seiten 717-739, XP087159160, ISSN: 0007-8506, DOI: 10.1016/J.CIRP.2022.05.004 [gefunden am 2022-07-30] * Übersichts-Paper zur Unterstreichung des allgemein üblichen Wissensstands * * Kapitel 3.2; Abbildung 6 * * Kapitel 8.2.2 * | | |
| | ----- | | |

Der vorliegende Recherchenbericht wurde für alle Patentansprüche erstellt

| Recherchenort | Abschlußdatum der Recherche | Prüfer |
|---|---|---|
| München | 20. September 2024 | Kollreider, Klaus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 16 9881

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-09-2024

| Im Recherchenbericht angeführtes Patentdokument | Datum der Veröffentlichung | Mitglied(er) der Patentfamilie | Datum der Veröffentlichung |
|---|---|---|---|
| US 2007098245 A1 | 03-05-2007 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 23166616 A